# EUROPÄISCHE PATENTSCHRIFT

(11) **EP 3 303 893 B1**
(45) Veröffentlichungstag und Bekanntmachung des Hinweises auf die Patenterteilung: **06.05.2020**
(21) Anmeldenummer: 16726872.1
(22) Anmeldetag: 02.06.2016
(51) Int. Cl.: A01J 7/02, A01J 5/04, F16L 23/10, F16L 29/00, F16L 55/105

(54) **SCHNELLKUPPLUNGSVORRICHTUNG**
QUICK-COUPLING DEVICE
DISPOSITIF DE RACCORDEMENT RAPIDE

(30) Priorität: 05.06.2015 DE 202015003900 U
(43) Veröffentlichungstag der Anmeldung: 11.04.2018
(73) Patentinhaber: GEA Farm Technologies GmbH, 59199 Bönen (DE)
(72) Erfinder: BALKENHOL, Reinhard, 33098 Paderborn (DE); WIETHOFF, Magnus, 59514 Welver (DE); NOEVERMAN, Niek, 7692 PB Marienberg (NL); GRUNDNER, Harald, 68766 Hockenheim (DE)
(74) Vertreter: Kleine, Hubertus
(86) Internationale Anmeldenummer: PCT/EP2016/062569
(87) Internationale Veröffentlichungsnummer: WO 2016/193399

(56) Entgegenhaltungen:
- EP-B2- 0 671 875
- US-A- 4 261 291
- DATABASE WPI Week 197941 1979 Thomson Scientific, London, GB; AN 1979-J7117B XP002760763, -& SU 640 083 A1 (VINOGRADOV N F) 30. Dezember 1978 (1978-12-30)

## Beschreibung

Die Erfindung betrifft eine Schnellkupplungsvorrichtung nach dem Oberbegriff des Anspruchs 1.

Melkanlagen, wie sie beispielsweise zum automatischen Melken von milchgebenden Tieren, beispielsweise Kühle, Schafe, Ziegen, verwendet werden, können mit derartigen Schnellkupplungsvorrichtungen versehen sein. Ein automatischer Melkvorgang kann mittels so genannter Melkroboter durchgeführt werden. Die Schnellkupplungsvorrichtungen dienen dazu, ein Melktechnikmodul von einer Milchleitung, z.B. für einen Wechsel zwecks Reinigung oder Austausch, zu trennen. Die Milchleitung kann so genannte gute oder schlechte Milch leiten.

Das Dokument EP 0 671 875 B2 beschreibt einen Milchrohrschieber. Ein Schieber mit einem Schlauchanschlussteil ist in einer Schieberführung auf einer Milchleitung befestigt. Dieser Schieber wird beim Anbringen oder Entfernen des Anschlusses so verschoben, dass er entweder einen Querschnitt zur Milchleitung verschließt oder freigibt. Der Schieber bleibt immer fest mit dem System verbunden. Hierbei wird es als nachteilig empfunden, dass sich ein Bereich des Schiebers nicht sicher reinigen lassen kann. Nach dem Schließen des Schiebers befindet sich dieser Bereich direkt im Innern der Melkleitung. Es sind jedoch einschlägige nationale Vorschriften und Richtlinien, z.B. die amerikanischen FDA-Richtlinien, zu beachten und einzuhalten, welche für Leitungen und Gerätschaften für Melkanlagen und Melkausrüstungen, die mit Milch in Kontakt kommen, gelten.

Eine Schnellkupplungsvorrichtung mit einem Ab- und einem Zuleitungsstutzen ist aus der Druckschrift SU 640083 bekannt. Bei dieser Vorrichtung sind zwei in Längsrichtung der Stutzen ausgerichtete Klammern vorhanden, die an einem der Stutzen befestigt sind und die mit ihrem jeweiligen freien Ende in eine Nut des anderen Stutzens eingreifen. Durch Ausheben der Klammerenden aus der Nut kann die Kupplung gelöst werden.

Ein Einschleifen einer Melkplatzanschlussbox in eine durchgehende Milchleitung ist in der Druckschrift US 4,261,291 A beschrieben. Bei dieser Vorrichtung werden zur Verbindung der Anschlussbox beidseitig Gelenkklemmen eingesetzt, mit denen zwei Flansche mit einem zwischengelegten Dichtungseinsatz schnell und unkompliziert miteinander dichtend verbunden werden können.

Aufgrund der immer weiter steigenden, insbesondere verschiedenen nationalen Anforderungen, insbesondere nach hohen Durchsatzzahlen und kontinuierlichem, wartungsarmen Betrieb bzw. mit langen Wartungsintervallen, besteht ein Bedarf nach einfachen und sicheren, d.h. auch mit besonderen Vorschriften konformen, Vorrichtungen.

Vor diesem Hintergrund besteht die Aufgabe der Erfindung darin, eine verbesserte Schnellkupplungsvorrichtung zu schaffen.

Diese Aufgabe wird durch eine Schnellkupplungsvorrichtung mit den Merkmalen des Anspruchs 1 gelöst.

Es wird eine Schnellkupplungsvorrichtung bereitgestellt, durch welche geplante Servicezeiten nicht nur korrekt eingehalten, sondern auch verkürzt werden können. Ein Ausbau der Melktechnikmodule ist auch während der Melkzeiten möglich, da das an den Melkleitungen anliegende Vakuum nicht ausgestellt werden muss. Eine Abschaltung des Anlagenbetriebs ist daher nicht mehr erforderlich.

Eine erfindungsgemäßes Schnellkupplungsvorrichtung für ein Melktechnikmodul einer Melkanlage zum Melken von milchgebenden Tieren, bildet eine auftrennbare und wieder herstellbare Verbindung zwischen dem Melktechnikmodul und einer Milchleitung und weist eine Ventileinrichtung auf, welche aus einem geschlossenen Zustand in einen geöffneten Zustand und wieder zurück verstellbar ist. Die Schnellkupplungsvorrichtung weist einen Zuleitungsstutzen, einen Ableitungsstutzen und zwei Gelencklemmen auf.

Der Aufbau mit zwei Gelenkklemmen ist vorteilhaft einfach und schnell zu trennen bzw. wieder zu verbinden. Die Gelenkklemmen können beispielsweise für genormte Flanschverbindungen wie z.B. nach ISO 2852 ausgebildet sein und sind somit in hoher Qualität und kostengünstig am Markt verfügbar.

Erfindungsgemäß bildet der Zuleitungsstutzen an einem Ende mit einer Gelencklemme eine auftrennbare und wieder herstellbare Verbindung zwischen dem Melktechnikmodul und dem Zuleitungsstutzen, und der Zuleitungsstutzen ist an seinem anderen Ende mit der anderen der Gelenkklemmen eine weitere auftrennbare und wieder herstellbare Verbindung zwischen dem Ableitungsstutzen und dem Zuleitungsstutzen. Die Verwendung zweier üblicher Gelenkklemmen ist vorteilhaft, da eine Bauteilvariation reduziert ist.

In einer Ausführung ist die andere der Gelenkklemmen als eine Schieberklemme mit mindestens einem Schlitz ausgebildet. Die Schieberklemme ist in ihrem Grundaufbau eine bereits oben genannte Gelenkklemme mit den dort beschriebenen Vorteilen.

Durch eine einfache Bearbeitung zur Herstellung mindestens eines Schlitzes kann sie schnell angepasst werden.

In einer weiteren Ausführung ist vorgesehen, dass der Zuleitungsstutzen an seinem anderen Ende einen Dichtungsflansch mit einer Zuleitungsdichtung aufweist, welcher mit einem Dichtungsflansch mit einer Ableitungsdichtung des Ableitungsstutzens und der Schieberklemme die weitere auftrennbare und wieder herstellbare Verbindung bildet. Damit wird eine einfache trennbare Verbindung geschaffen.

Die Vorgaben von Zulassungsbehörden, insbesondere FDA, sehen vor, dass beim Wechseln des Milchmoduls, also beim Trennen der Schnellkupplungsvorrichtung, keine zusätzliche Außenluft und erst recht keine Verschmutzungen in das Innere der Milchleitungen gelangen dürfen. Außerdem muss jeder Bereich im Inneren bei der Reinigung des Systems auch sauber werden. Nach der Reinigung dürfen keine Flüssigkeitsreste zurückbleiben. Die Schnellkupplungsvorrichtung ist daher mit der weiteren auftrennbaren und wieder herstellbaren Verbindung auch vorteilhaft selbstentwässernd, da der Zuleitungsstutzen einfach entfernbar ist.

In einer weiteren Ausführung ist die Ventileinrichtung zwischen dem anderen Ende des Zuleitungsstutzens mit der Schieberklemme und dem Ableitungsstutzen angeordnet. Dies ist vorteilhaft, da beim Auftrennen genau dieser Bereich leicht zugänglich und leicht zu reinigen ist.

Eine noch weitere Ausführung sieht vor, dass die Ventileinrichtung die Zuleitungsdichtung, die Ableitungsdichtung und ein separates Schieberelement umfasst. Ein separates Schieberelement ist besonders vorteilhaft, da dieses vollständig gereinigt werden kann und so im Gegensatz zum Stand der Technik keine ungereinigten Bereiche mit Milchleitungen in Berührung kommen können. Zudem weist das Schieberelement eine flache Form auf, welche daher für eine Reinigung und Desinfektion vorteilhaft ist.

Hierzu ist vorgesehen, dass die Ventileinrichtung in dem geöffneten Zustand ist, wenn das separate Schieberelement entfernt ist, und dass die Ventileinrichtung in dem geschlossenen Zustand ist, wenn das separate Schieberelement zwischen der Zuleitungsdichtung und der Ableitungsdichtung angeordnet ist. Ein Vorteil besteht hierbei darin, dass es in der geöffneten Stellung der Ventileinrichtung zu keiner Umlenkung eines Volumenstroms noch zu irgendwelchen Strömungsveränderungen kommen kann. Der volle Innenquerschnitt bleibt erhalten.

Soll nun der Volumenstrom bzw. Vakuumstrom zur Auftrennung durch die Schnellkupplungsvorrichtung unterbrochen werden, wird das Schieberelement zwischen die Zuleitungsdichtung und die Ableitungsdichtung geschoben, wobei die Vakuumseite mit dem Schieberelement dicht abgesperrt wird.

Dazu ist es vorgesehen, dass das separate Schieberelement in der geschlossenen Stellung der Ventileinrichtung zwischen der Zuleitungsdichtung und der Ableitungsdichtung in einer Kontaktebene, in welcher die Zuleitungsdichtung und die Ableitungsdichtung miteinander in Kontakt stehen, zumindest in Führungsschlitzen des Dichtungsflansches des Ableitungsstutzens aufgenommen und gehalten ist.

In einer alternativen Ausführung weist der Dichtungsflansch des Ableitungsstutzens eine Schieberführung, bei welcher die Führungsschlitze in Segmente eingeformt sind, und einen Rastabschnitt auf, welcher in dem geschlossenen Zustand der Ventileinrichtung mit einer Rastöffnung des eingeschobenen Schieberelementes in Eingriff steht. Die Schieberklemme kann nun gelöst werden. Das Milchmodul kann entfernt und z.B. ausgetauscht werden. Nach dem Anbringen der Schieberklemme kann das Schieberelement wieder herausgezogen werden, womit die Ventileinrichtung wieder geöffnet ist. Es ist nicht erforderlich, das Vakuum hierbei auszuschalten. Dies ist vorteilhaft, da es Zeit spart. Die Gesamtinstallation muss nicht abgeschaltet werden, um ein einzelnes Melkmodul während des Betriebs wechseln zu können.

In einer Ausführung stehen die Segmente des Dichtungsflansches des Ableitungsstutzens in Richtung seiner Achse hervor, wobei zwischen ihnen in Richtung der Achse relativ zu ihnen abgesenkte Ausnehmungen angeordnet sind, welche mit den Segmenten ein Profil bilden, das in der weiteren hergestellten Verbindung mit einem mit diesem korrespondierenden Profil eines Eingriffsabschnitts der Unterseite des Dichtungsflansches des Zuleitungsstutzens formschlüssig und relativ zueinander unverdrehbar in Eingriff steht. Dies ergibt einen vorteilhaft einfachen, schnellen und präzisen Zusammenbau.

Es ist vorteilhaft, wenn sich das separate Schieberelement in der geschlossenen Stellung der Ventileinrichtung durch zumindest einen Schlitz der Schieberklemme erstreckt. Dadurch ermöglicht sich ein schnelles Einschieben des Schieberelementes bei gleichzeitiger Verwendung der üblichen Vorteile einer Gelenkklemme.

In einer Ausführung bildet das Schieberelement in der geschlossenen Stellung der Ventileinrichtung in der weiteren aufgetrennten und in der hergestellten Verbindung zwischen dem Zuleitungsstutzen und dem Ableitungsstutzen eine dichte Verbindung mit der Ableitungsdichtung. Das Schieberelement kann daher vorteilhaft solange in seiner Dichtungs- bzw. Absperrposition an dem Ableitungsstutzen verbleiben, bis das reparierte bzw. gewartete oder ausgetauschte Milchmodul wieder eingesetzt wird.

In einer alternativen Ausführung der Schnellkupplungsvorrichtung weist der Zuleitungsstutzen an seinem anderen Ende einen Dichtungsflansch auf, welcher mit einem Dichtungsflansch des Ableitungsstutzens, einer zwischen diesen Dichtungsflanschen angeordneten Dichtung und der anderen Gelenkklemme die weitere auftrennbare und wieder herstellbare Verbindung bildet. Durch die Verwendung einer Dichtung ist eine Bauteileanzahl verringert.

Es ist weiterhin vorgesehen, dass die Ventileinrichtung zwischen dem anderen Ende des Zuleitungsstutzens mit der anderen Gelenkklemme und dem Ableitungsstutzen angeordnet ist. Die Ventileinrichtung ist somit vorteilhaft einfach und schnell erreichbar und zu säubern.

In einer weiteren Ausführung umfasst die Ventileinrichtung einen Ventilkörper, eine Ventilstange, einen Ventilsitz in dem Dichtungsflansch des Ableitungsstutzens und eine Betätigungseinrichtung. Die Ventileinrichtung ist mit der Betätigungseinrichtung vorteilhaft von außen zu betätigen. Ein besonderer Vorteil hierbei besteht darin, dass nach Auftrennung und Entfernung des Zuleitungsstutzens eine glatte Trennfläche vorliegt, wobei der Ventilkörper von seiner Oberseite her frei zugänglich ist und einfach gesäubert und desinfiziert werden kann. Zudem wird der Ventilkörper durch das in dem Ableitungsstutzen immer noch vorhandene Vakuum in den Ventilsitz gezogen, wodurch sich eine Dichtigkeit verstärkt.

In einer noch weiteren Ausführung ist der Ventilkörper mit einem oberen Stangenende der Ventilstange fest verbunden, wobei eine Dichtfläche des Ventilkörpers mit dem Ventilsitz in dem Dichtungsflansch des Ableitungsstutzens korrespondiert, wobei der Ventilkörper in der geschlossenen Stellung der Ventileinrichtung mit seiner Dichtfläche den Ventilsitz verschließt, und wobei in der geöffneten Stellung der Ventileinrichtung die Dichtfläche des Ventilkörpers von dem Ventilsitz beabstandet ist.

In einer noch weiteren Ausführung erstreckt sich die Ventilstange durch eine Verbindungsleitung des Körpers des Ableitungsstutzens hindurch in einen Lagerabschnitt des Ableitungsstutzens hinein und durch diesen Lagerabschnitt hindurch bis in die Betätigungseinrichtung, wobei ein unteres Stangenende der Ventilstange mit einem Betätigungselement der Betätigungseinrichtung fest verbunden ist. Dies ergibt einen vorteilhaft kompakten Aufbau.

Eine andere Ausführung sieht vor, dass die Betätigungseinrichtung einen Lagerflansch mit einem Hülsenabschnitt, das Betätigungselement, eine Kulissenführung und ein Kraftspeicherelement umfasst. Auf diese Weise kann eine korrekte Einstellung der Zustände der Ventileinrichtung von außen einfach vorgenommen werden.

In einer noch weiteren Ausführung ist die Kulissenführung in der Wandung des Hülsenabschnitts eingeformt und bildet mit einem mit dem Betätigungselement verbundenes Führungselement ein so genanntes mechanisches RS-Flip-Flop mit zwei stabilen Zuständen, nämlich Ventileinrichtung geschlossen und Ventileinrichtung geöffnet. Damit ist vorteilhaft einfach von außen die Stellung der Ventileinrichtung erkennbar.

In einer anderen Ausführung sind zumindest ein Abschnitt des Zuleitungsstutzens und zumindest ein davon trennbarer und wieder damit verbindbarer Abschnitt des Ableitungsstutzens zueinander zentriert angeordnet. Dies ergibt den Vorteil einer einfachen Abdichtung.

Weitere Vorteile und Einzelheiten gehen aus dem in den Figuren der Zeichnung dargestellten Ausführungsbeispiel hervor. Hierbei zeigen:
- Figur 1: eine schematische Perspektivdarstellung eines beispielhaften Einsatzfalls eines ersten Ausführungsbeispiels einer erfindungsgemäßen Schnellkupplungsvorrichtung;
- Figur 2: eine schematische Perspektivdarstellung des ersten Ausführungsbeispiels nach Figur 1 in einer geöffneten Verbindungsstellung;
- Figur 3: eine schematische Längsschnittdarstellung des ersten Ausführungsbeispiels nach Figur 2 in der geöffneten Verbindungstellung;
- Figuren 4-5: schematische Darstellungen des ersten Ausführungsbeispiels nach Figur 2 in einer geschlossenen Verbindungsstellung;
- Figur 6: eine schematische Explosionsdarstellung des ersten Ausführungsbeispiels nach Figur 2;
- Figur 7: eine schematische Perspektivdarstellung des ersten Ausführungsbeispiels nach Figur 4-5 in der geschlossenen Verbindungsstellung aus einer anderen Ansicht;
- Figur 8: eine schematische Perspektivdarstellung einer Variante des ersten Ausführungsbeispiels nach Figur 7 in einer geschlossenen Trennstellung ;
- Figuren 9-9a: eine schematische Perspektivdarstellung eines beispielhaften Einsatzfalls eines zweiten Ausführungsbeispiels der erfindungsgemäßen Schnellkupplungsvorrichtung;
- Figur 10: eine schematische Perspektivdarstellung des zweiten Ausführungsbeispiels nach Figur 9 in einer geöffneten Verbindungsstellung;
- Figur 11: eine schematische Längsschnittdarstellung des zweiten Ausführungsbeispiels nach Figur 10 in der geöffneten Verbindungstellung;
- Figur 12: eine schematische Längsschnittdarstellung des zweiten Ausführungsbeispiels nach Figur 10 in der geschlossenen Verbindungstellung;
- Figur 13: eine schematische Längsschnittdarstellung des zweiten Ausführungsbeispiels nach Figur 12 in einer geschlossenen Trennstellung ;
- Figur 14: eine vergrößerte Perspektivansicht einer Betätigungseinrichtung des zweiten Ausführungsbeispiels nach Figur 10 in der geöffneten Verbindungstellung;
- Figur 14a: eine vergrößerte Perspektivansicht der Betätigungseinrichtung nach Figur 14 in der geschlossenen Verbindungstellung oder in der geschlossenen Trennstellung ; und
- Figur 15: eine schematische Explosionsdarstellung des zweiten Ausführungsbeispiels nach Figur 10.

Die Begriffe "oben", "unten", "links", "rechts" beziehen sich auf die jeweilige Anordnung in den Figuren. Eine Einbaulage, z.B. auf dem Kopf, seitlich oder in einer anderen Lage, ist darauf nicht eingeschränkt.

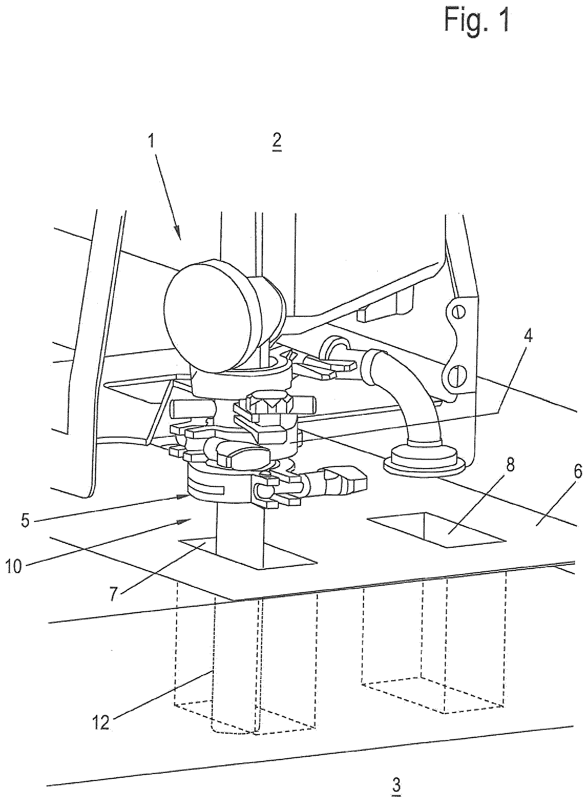

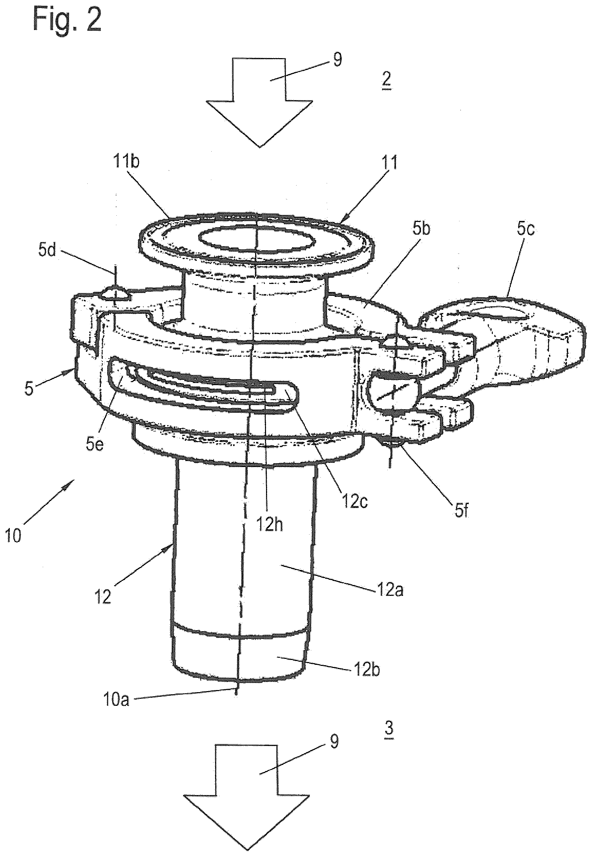

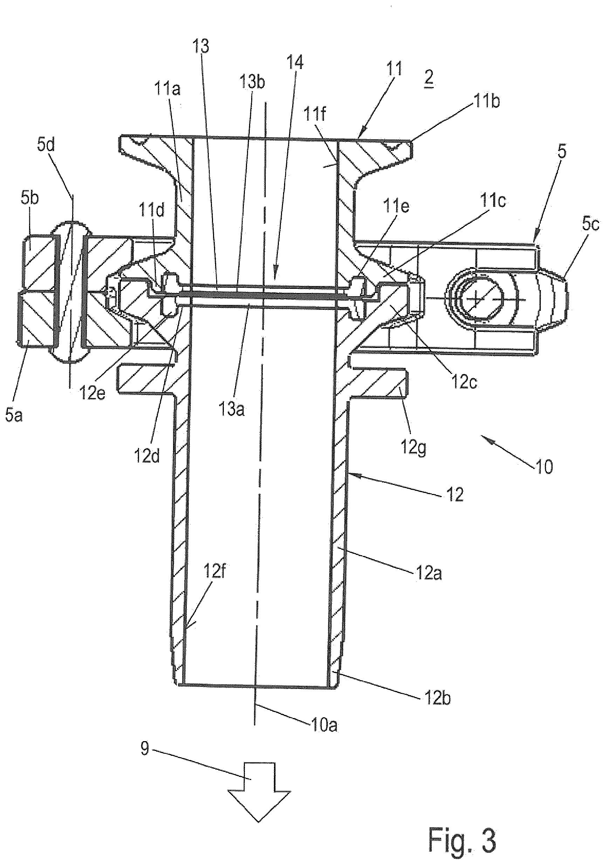

Figur 1 zeigt eine schematische Perspektivdarstellung eines beispielhaften Einsatzfalls eines ersten Ausführungsbeispiels einer erfindungsgemäßen Schnellkupplungsvorrichtung 10. In Figur 2 ist eine schematische Perspektivdarstellung des ersten Ausführungsbeispiels nach Figur 1 in einer geöffneten Verbindungsstellung gezeigt, und Figur 3 stellt eine schematische Längsschnittdarstellung des ersten Ausführungsbeispiels nach Figur 2 in der geöffneten Verbindungstellung dar.

In Figur 1 ist ein Ausschnitt aus einem Melkstand gezeigt, in welchem ein milchgebendes Tier mittels einer Melkanlage gemolken wird. Aufbau und Wirkungsweise eines solchen Melkstandes kann z.B. der WO 2013/135842 A1 entnommen werden und werden hier nicht weiter erläutert. Die gemolkene Milch wird von einem hier nicht näher erläuterten Melktechnikmodul 1 unter Einfluss eines erzeugten Vakuums in eine nicht gezeigte aber leicht vorstellbare Milchleitung geleitet.

Zwischen dem Melktechnikmodul 1 auf einer Melkanlagenseite 2 und der Milchleitung auf einer Vakuumseite 3 ist die Schnellkupplungsvorrichtung 10 angeordnet und leitet einen Vakuumstrom mit der gemolkenen Milch von dem Melktechnikmodul 1 in die Milchleitung auf der Vakuumseite 3.

Die Schnellkupplungsvorrichtung 10 bildet eine auftrennbare und wieder herstellbare Verbindung zwischen dem Melktechnikmodul 1 und der Milchleitung und ermöglicht es, das Melktechnikmodul 1 während des Betriebes, d.h. während Vakuum an der oder den Milchleitung/Milchleitungen anliegt, auszuwechseln.

In dem gezeigten Beispiel sind zwei Schnellkupplungsvorrichtungen 10 vorgesehen, von denen hier nur eine der Übersichtlichkeit halber dargestellt ist. Jede Schnellkupplungsverbindung 10 umfasst einen Zuleitungsstutzen 11, einen Ableitungsstutzen 12, eine Gelenkklemme 4 und eine Schieberklemme 5. Der Zuleitungsstutzen 11 und der Ableitungsstutzen 12 liegen zueinander zentriert in einer Vakuumströmung 9. Die zugehörigen Bauteile werden unten noch ausführlich beschrieben.

Das Melktechnikmodul 1 ist auf der Melkanlagenseite 2 z.B. an einer Halterung auf einer Bodenplatte 6 ausbaubar angeordnet. In der Bodenplatte 6 sind zwei Durchgänge für jeweils einen Ableitungsstutzen 12 einer jeweiligen Schnellkupplungsvorrichtung 10 eingebracht.

Auf der Melkanlagenseite 2 ist die Schnellkupplungsvorrichtung 10 über den Zuleitungsstutzen 11 mit dem Melktechnikmodul 1 verbunden. Dazu sind hier zwei lösbare Verbindungen vorgesehen, nämlich eine erste lösbare Verbindung zwischen dem Melktechnikmodul 1 und einem ersten, oberen Ende des Zuleitungsstutzens 11 und eine zweite lösbare Verbindung zwischen einem zweiten, unteren Ende des Zuleitungsstutzens 11 und einem oberen Ende des Ableitungsstutzens 12. Die erste lösbare Verbindung weist die Gelenkklemme 4 auf. Der zweiten Verbindung ist die Schieberklemme 5 zugeordnet.

Die Gelenkklemme 4 ist z.B. eine handelsübliche Gelenkklemme für eine Flanschverbindung nach der Norm ISO 2852. Die Schieberklemme 5 weist als Basis auch eine solche Gelenkklemme auf, wobei die Schieberklemme 5 mit weiteren Merkmalen versehen ist, die unten noch näher beschrieben werden.

Gemäß bestimmter einschlägiger Normen sehen z.B. Vorgaben einer Zulassungsbehörde (insbesondere FDA in den USA) vor, dass beim Auswechseln des Melktechnikmoduls 1, also beim Trennen der Schnellkupplungsvorrichtung 10 keine zusätzliche Außenluft und erst recht keine Verschmutzungen in das Innere der Milchleitungen geraten dürfen. Dazu ist die Schnellkupplungsvorrichtung 10 mit einer Ventileinrichtung 14 zwischen dem Zuleitungsstutzen 11 und dem Ableitungsstutzen 12 ausgerüstet, welche aus einer geöffneten Stellung in eine geschlossene Stellung und wieder zurück verstellt werden kann. Die Ventileinrichtung 14 wird unten noch im Detail erläutert.

Die Schnellkupplungsvorrichtung 10 weist drei unterschiedliche Stellungen auf. In einer geöffneten Verbindungsstellung ist die Ventileinrichtung 14 geöffnet und das Melktechnikmodul 1 ist über die Schnellkupplungsvorrichtung 10 mit der Milchleitung verbunden. Dies ist der Fall, wenn die Vakuumströmung 9 von dem Melktechnikmodul 1 in die Milchleitung geleitet wird.

Wenn die Ventileinrichtung 14 geschlossen ist und das Melktechnikmodul 1 weiterhin über die Schnellkupplungsvorrichtung 10 mit der Milchleitung verbunden ist, ist eine geschlossene Verbindungsstellung eingenommen. Diese Stellung wird durch ein Verschließen der Ventileinrichtung 14 erreicht. Dabei wird die Vakuumströmung 9 unterbrochen. Der Ableitungsstutzen 12 ist weiterhin mit dem Vakuum beaufschlagt, wobei der Zuleitungsstutzen 11 in dieser Stellung vakuumfrei ist.

Danach können die Gelenkklemme 4 und die Schieberklemme 5 gelöst und entfernt werden, wonach das Melktechnikmodul 1 vakuumfrei entnommen werden kann. Diese Stellung wird als geschlossene Trennstellung bezeichnet.

Das entnommene Melktechnikmodul 1 kann nach Reparatur, Reinigung oder Ersatz in der geschlossenen Trennstellung wieder eingesetzt werden. Nach Aufbringen der Gelenkklemme 4 und der Schieberklemme 5 sind die Verbindungen wieder hergestellt und die geschlossene Verbindungsstellung ist wieder eingenommen. Für eine Wiederaufnahme des Betriebs wird nun die geöffnete Verbindungsstellung durch Öffnen der Ventileinrichtung 14 hergestellt.

Während dieses Auswechselvorgangs des Melktechnikmoduls 1 ist ein Abschalten des Vakuums nicht erforderlich, wodurch Zeit eingespart wird.

Die Schnellkupplungsvorrichtung 10 umfasst in dem ersten Ausführungsbeispiel den Zuleitungsstutzen 11, den Ableitungsstutzen 12, die Gelenkklemme 4 und die Schieberklemme 5 und weiterhin die Ventileinrichtung 14.

Der Zuleitungsstutzen 11 weist einen rohrförmigen Körper 11 a mit einem kreisrunden Querschnitt und einem Innenraum 11f auf. An einem oberen Ende ist der Körper 11a mit einem Verbindungsflansch 11b und an einem unteren Ende mit einem Dichtungsflansch 11c versehen. Der Verbindungsflansch 11b und der Dichtungsflansch 11c sind nach ISO 2852 ausgebildet. Zudem weist der Dichtungsflansch 11c an seiner Unterseite eine Zentrierung 11d und eine Aufnahme 11e für eine Zuleitungsdichtung 13 auf. Die Unterseite des Dichtungsflansches 11c kann auch zusätzlich Eingriffsabschnitte 11g aufweisen, die unten weiter noch erläutert werden.

Der Ableitungsstutzen 12 umfasst einen rohrförmigen Körper 12a mit einem kreisrunden Querschnitt und einem Innenraum 12f, wobei ein Innendurchmesser des Innenraums 12f gleich einem Innendurchmesser des Innenraums 11f des Zuleitungsstutzens 11 ist. Ein Dichtungsflansch 12c nach ISO 2852 ist an einem oberen Ende des Körpers 12a angeformt. Der Dichtungsflansch 12c ist an seiner Oberseite mit einer Zentrierung 12d versehen, welche mit der Zentrierung 11d des Zuleitungsstutzens 11 korrespondiert. Weiterhin ist eine Aufnahme 12e für eine Ableitungsdichtung 13a in den Dichtungsflansch 12c von seiner Oberseite her eingeformt.

Unterhalb des Dichtungsflansches 12c des Ableitungsstutzens 12 ist ein umlaufender Kragen 12g angeordnet.

Das untere Ende des Körpers 12a ist mit einem hier konischen Verbindungsende 12b versehen, das eine nicht gezeigte Verbindung zur Milchleitung bildet.

Der Zuleitungsstutzen 11 und der Ableitungsstutzen 12 sind über ihre Zentrierungen 11d, 12d derart zentriert, dass sie koaxial zu einer gemeinsamen Achse 10a angeordnet sind.

In der Aufnahme 11e des Zuleitungsstutzens 11 ist die Zuleitungsdichtung 13 eingesetzt. In gleicher Weise ist die Aufnahme 12e des Ableitungsstutzens 12 mit der Ableitungsdichtung 13a versehen. In der geöffneten Verbindungsstellung, die z.B..in Figur 3 dargestellt ist, stehen die Zuleitungsdichtung 13 und die Ableitungsdichtung 13a miteinander in Kontakt, wobei ihre Innendurchmesser den Innendurchmessern der Innenräume 11f, 12f von Zuleitungsstutzen 11 und Ableitungsstutzen 12 entsprechen. Damit ist eine Leitung der Vakuumströmung 9 von dem Zuleitungsstutzen 11 in den Ableitungsstutzen 12 gewährleistet.

Der Dichtungsflansch 12c des Ableitungsstutzens 12 ist hier zudem mit zwei gegenüberliegenden, in einer gemeinsamen Ebene liegenden Führungsschlitzen 12h versehen. Die gemeinsame Ebene der Führungsschlitze 12h verläuft rechtwinklig zu der Achse 10a und liegt in einer Kontaktebene 13b, in welcher die Zuleitungsdichtung 13 und die Ableitungsdichtung 13a miteinander in Kontakt stehen.

Die Zuleitungsdichtung 13 und die Ableitungsdichtung 13a können z.B. als Flachdichtungen ausgebildet sein.

Der Dichtungsflansch 11c des Zuleitungsstutzens 11 und der Dichtungsflansch 12c des Ableitungsstutzens 12 sind umlaufend von der Schieberklemme 5 umgeben und werden von dieser, wenn sie gespannt ist wie in Figur 2 und 3 zu erkennen ist, über ihre konischen Außenprofile nach ISO 2852 dicht zusammengepresst. Dabei werden die in Kontakt stehenden Dichtungen 13 und 13a derart dicht aufeinander gedrückt, dass eine dichte Verbindung zwischen dem Zuleitungsstutzen 11 und dem Ableitungsstutzen 12 gebildet ist.

Die Zuleitungsdichtung 13 und die Ableitungsdichtung 13a sind Bestandteil der Ventileinrichtung 14, welche zudem ein Schieberelement 15 aufweist, das unten noch im Detail erläutert wird. In der in Figur 2 und 3 gezeigten geöffneten Verbindungsstellung der Schnellkupplungsvorrichtung 10 ist das Schieberelement 15 entfernt.

Die Schieberklemme 5 umfasst zwei Klemmbügel 5a, 5b, welche mit jeweils einem Ende in einer Gelenkachse 5d miteinander verschwenkbar verbunden sind. Die anderen sich gegenüberliegenden Enden sind gabelförmig ausgebildet und mit einem schraubbaren Spannelement 5c versehen, das mit einem Bolzen 5f an dem gabelförmigen Ende des einen Klemmbügels 5a verschwenkbar angebracht ist. Dieser Basisaufbau liegt auch der Gelenkklemme 4 in gleichem Aufbau zugrunde. Die Gelenkklemme 4 und der Basisaufbau der Schieberklemme 5 können z. B. übliche Gelenkklemmen für eine Flanschverbindung nach ISO 2852 sein.

Die Schieberklemme 5 ist im Unterschied zu dem oben beschriebenen Basisaufbau einer üblichen Gelenkklemme mit jeweils einem Schlitz 5e versehen. Jeder Klemmbügel 5a, 5b weist diesen Schlitz 5e auf, welcher sich in Umfangsrichtung eines jeden Klemmbügels 5a, 5b mittig über etwa zwei Drittel eines Umfangs eines jeden Klemmbügels 5a, 5b erstreckt und in einer Projektionsebene die Form eines Langlochs aufweist.

Die Schieberklemme 5 ist auf den Dichtungsflanschen 11c, 12c so angeordnet, dass zumindest ein Schlitz 5e einem Führungsschlitz 12h des Dichtungsflansches 12c des Ableitungsstutzens 12 gegenüberliegt.

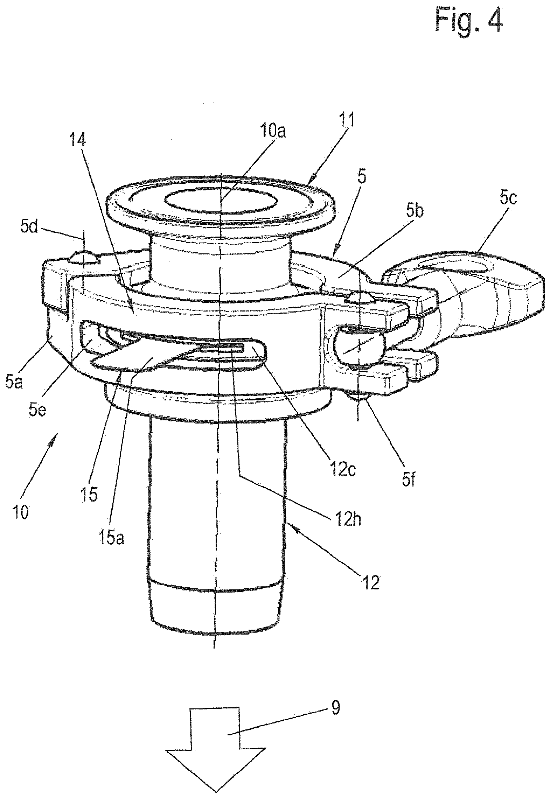

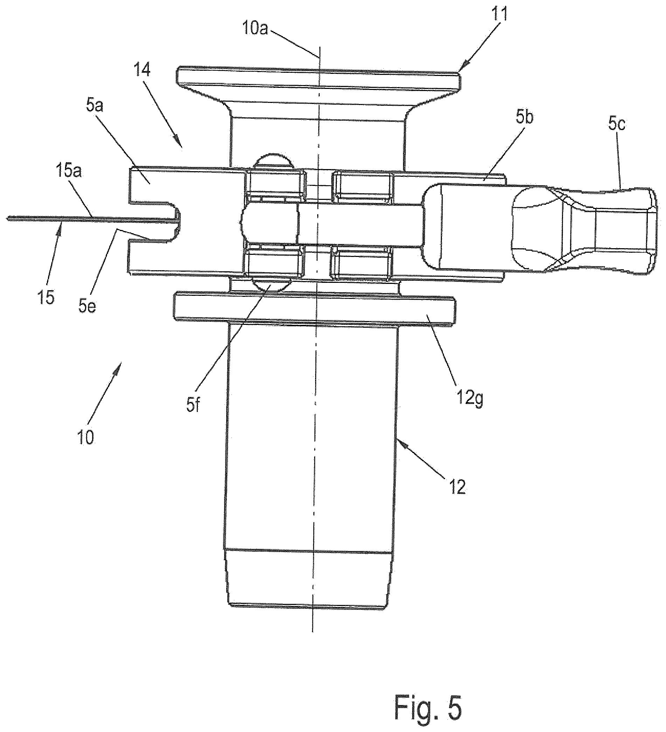

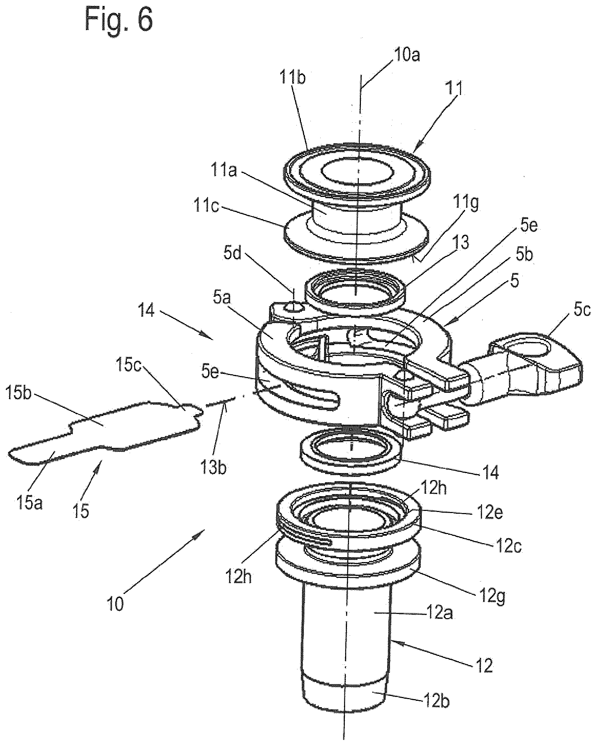

Figur 4 zeigt eine schematische Perspektivansicht des ersten Ausführungsbeispiels nach Figur 2 in der geschlossenen Verbindungsstellung. Figur 5 zeigt eine Seitenansicht dazu, und Figur 6 stellt eine schematische Explosionsdarstellung des ersten Ausführungsbeispiels nach Figur 2 dar.

In der geschlossenen Verbindungsstellung der Schnellkupplungsvorrichtung 10 ist das Schieberelement 15 der Ventileinrichtung 14 zwischen die Zuleitungsdichtung 13 und die Ableitungsdichtung 13a in der gemeinsamen Ebene der Führungsschlitze 12h und der Kontaktebene 13b der Zuleitungsdichtung 13 und der Ableitungsdichtung 13a eingeschoben. Dieses wird durch die Schlitze 5e der Schieberklemme 5 und die Führungsschlitze 12h des Dichtungsflansches 12c des Ableitungsstutzens 12 ermöglicht.

Das Schieberelement 15 umfasst einen Betätigungsabschnitt 15a, einen Dichtabschnitt 15b und einen Endabschnitt 15c. Der Betätigungsabschnitt 15a dient zur manuellen Handhabung zum Einschieben des Schieberelementes 15 durch einen der Schlitze 5e der Schieberklemme 5 in die Kontaktebene 13b der Dichtungen 13 und 13a. Der Dichtabschnitt 15b verschließt in der eingeschobenen Position des Schieberelementes 15 in der Kontaktebene 13b die inneren Durchgangsöffnungen der Zuleitungsdichtung 13 und der Ableitungsdichtung 13a vollständig derart, dass die Vakuumströmung 9 unterbrochen wird, wobei der Innenraum 12f des Ableitungsstutzens 12 weiterhin mit dem Vakuum beaufschlagt bleibt.

Die Führungsschlitze 12h des Dichtungsflansches 12c des Ableitungsstutzens 12 bilden eine Führung für das Schieberelement 15.

In der eingeschobenen Position des Schieberelementes 15 liegt der Endabschnitt 15c des Schieberelementes 15 in dem gegenüberliegenden Führungsschlitz 12h. Dazu kann der gegenüberliegende Führungsschlitz 12h in seiner Umfangslänge kürzer gestaltet sein, wodurch ein Anschlag für den Dichtabschnitt 15b gebildet sein kann.

Der Betätigungsabschnitt 15a des Schieberelementes 15 steht aus dem Schlitz 5e radial nach außen hervor. Damit ist das Schieberelement 15 schnell und einfach zu ergreifen und zu handhaben.

Das Schieberelement 15 ist z.B. aus einem metallischen Werkstoff, der leicht zu reinigen und zu desinfizieren ist. Es kann z.B. aus einem Edelstahlblech als Stanzteil hergestellt sein, wobei der Edelstahl für den Anwendungsfall eine normenmäßige bzw. vorgabenmäßig Zulassung besitzen muss.

In Figur 5 ist dargestellt, dass der umlaufende Kragen 12g des Ableitungsstutzens 12 eine Auflage für den Bolzen 5f und denjenigen der Gelenkachse 5d der Schieberklemme 5 bildet. Damit ist eine waagerechte Positionierung der Schieberklemme 5 ermöglicht, wodurch das Schieberelement 15 durch die Schlitze 5e ohne zu verkanten eingeführt werden kann.

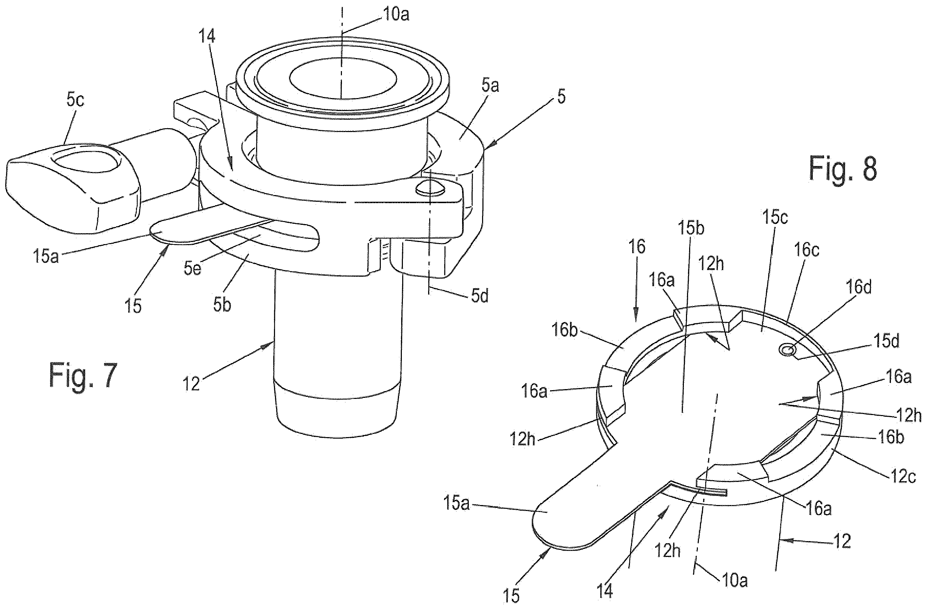

Figur 7 zeigt eine schematische Perspektivdarstellung des ersten Ausführungsbeispiels nach Figur 4-5 in der geschlossenen Verbindungsstellung aus einer anderen Ansicht. Hierbei ist der Schlitz 5e des anderen Klemmbügels 5b gezeigt. Damit ist es möglich, das Schieberelement 15 von zwei Seiten in die Ventileinrichtung 14 zum Schließen derselben einzuschieben.

Figur 8 stellt eine schematische Perspektivdarstellung einer Variante des ersten Ausführungsbeispiels nach Figur 7 in einer geschlossenen Trennstellung dar.

In dieser Variante weist die Oberseite des Dichtungsflansches 12c des Ableitungsstutzens 12 eine Schieberführung 16 auf, bei welcher die Führungsschlitze 12h in Segmente 16a eingeformt sind. Hier sind vier Segmente 16a auf dem Umfang der Oberseite des Dichtungsflansches 12c regelmäßig angeordnet. Zwei Segmente 16a bilden mit jeweils einem Führungsschlitz 12h einen Einführungsabschnitt für das Schieberelement 15. An jedes dieser "Eck"-Segmente 16a an dem Einführungsabschnitt schließt sich am Umfang jeweils eine Ausnehmung 16b, deren jeweilige Oberseite in Richtung der Achse 10a niedriger liegt als die Oberseiten der Segmente 16a. Die Oberflächen der Oberseiten der Ausnehmungen 16b liegen ungefähr auf gleicher Höhe der Oberseite des eingeschobenen Schieberelementes 15.

An jede der Ausnehmungen 16b schließt sich am Umfang jeweils ein weiteres "Eck"-Segment 16a an, welche auch jeweils einen Führungsschlitz 12h für die hinteren, abgerundeten Ecken des Dichtabschnitts 15b aufweisen, in denen diese aufgenommen sind. Die hinteren "Eck"-Segmente 16a sind untereinander durch eine kreisringabschnittsförmige Wand 16c verbunden, welche gleichzeitig einen Anschlag für eine abgerundete Kante des Endabschnitts 15c des Schieberelementes 15 bilden. Ein Radius der abgerundeten Ecken des Dichtabschnitts 15b und der abgerundeten Kante des Endabschnitts 15c des Schieberelementes 15 entspricht einem Innenradius der Wand 16c. Weiterhin ist der Endabschnitt 16d mittig mit einer Rastöffnung 15d versehen, welche in der eingeschobenen Position des Schieberelementes 15 mit einem Rastabschnitt 16d, z.B. eine Erhöhung, des Dichtungsflansches 12c des Ableitstutzens 12 in Eingriff steht.

Die in Richtung der Achse 10a nach oben hervorstehenden Segmente 16a und die in Richtung der Achse 10a nach unten abgesenkten Ausnehmungen 16b stehen in der geschlossenen Verbindungsstellung und in der geöffneten Verbindungsstellung mit einem mit ihnen korrespondierenden Profil (nicht gezeigt, aber leicht vorstellbar) eines Eingriffsabschnitts 11g der Unterseite des Dichtungsflansches 12c des Zuleitungsstutzens 11 formschlüssig und somit relativ zueinander unverdrehbar in Eingriff.

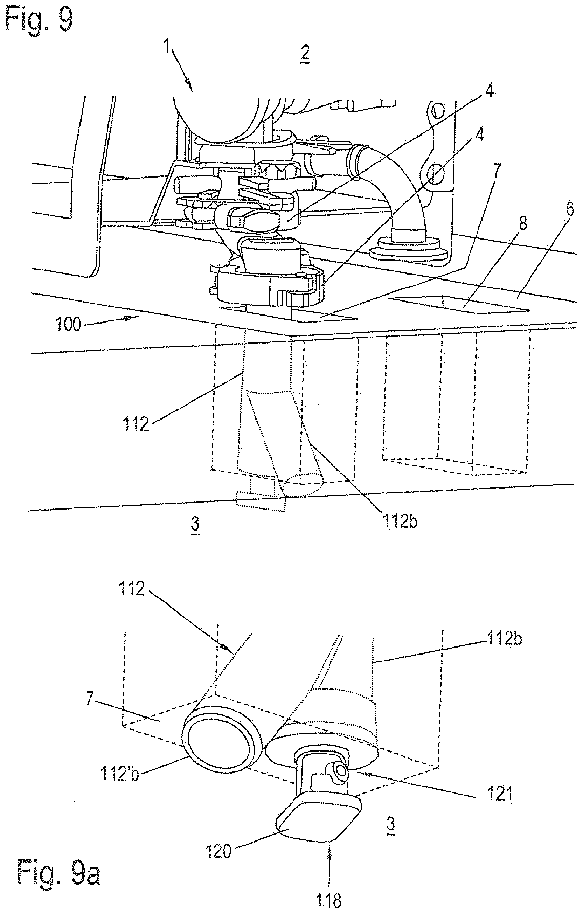

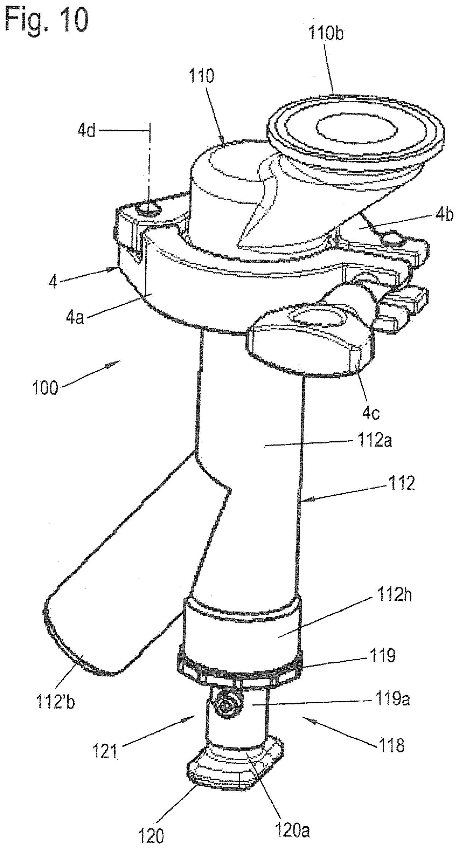

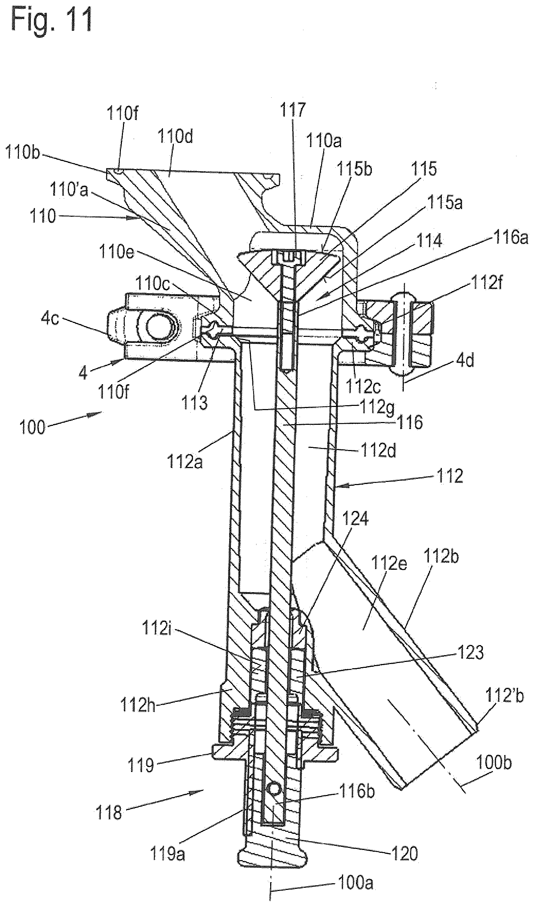

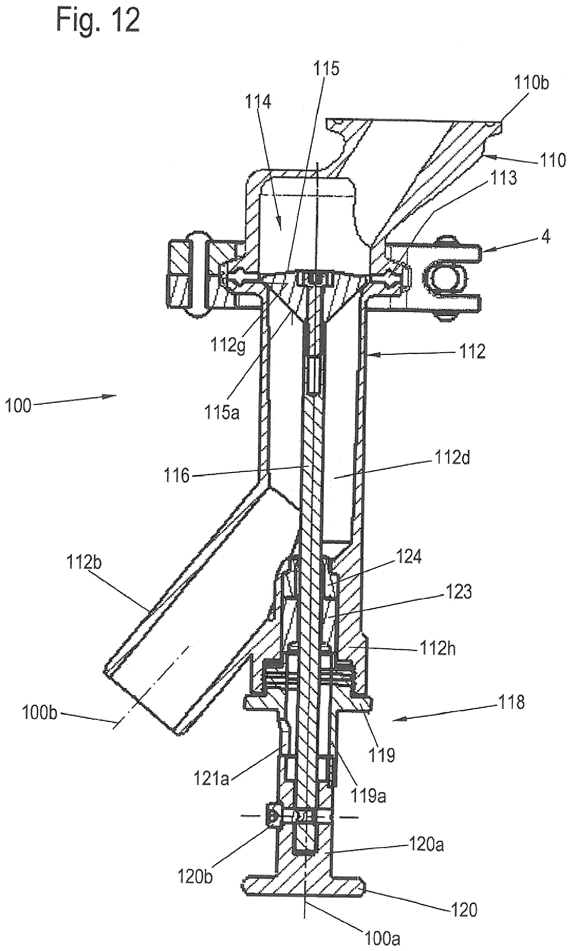

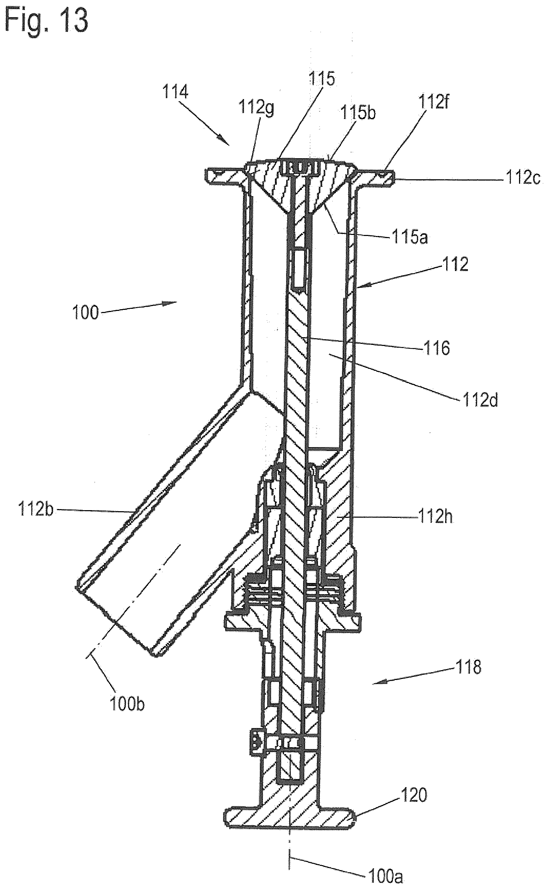

Figur 9 stellt eine schematische Perspektivdarstellung eines beispielhaften Einsatzfalls eines zweiten Ausführungsbeispiels einer erfindungsgemäßen Schnellkupplungsvorrichtung 100 dar. In Figur 9a ist ein vergrößerter Abschnitt der Unterseite der Schnellkupplungsvorrichtung 100 gezeigt. Figur 10 zeigt eine schematische Perspektivdarstellung des zweiten Ausführungsbeispiels nach Figur 9 in einer geöffneten Verbindungsstellung, wobei Figur 11 dazu eine schematische Längsschnittdarstellung des zweiten Ausführungsbeispiels nach Figur 10 in der geöffneten Verbindungstellung darstellt. Figur 12 ist eine schematische Längsschnittdarstellung des zweiten Ausführungsbeispiels nach Figur 10 in der geschlossenen Verbindungstellung. In Figur 13 ist eine schematische Längsschnittdarstellung des zweiten Ausführungsbeispiels nach Figur 12 in einer geschlossenen Trennstellung gezeigt.

Das zweite Ausführungsbeispiel der Schnellkupplungsvorrichtung 100 unterscheidet sich von dem ersten Ausführungsbeispiel der Schnellkupplungsvorrichtung 10 durch die Gestaltung des Zuleitungsstutzens 110 und des Ableitungsstutzens 120 sowie durch den Aufbau der Ventileinrichtung 114. Zudem sind in dem zweiten Ausführungsbeispiel zwei gleiche Gelenkklemmen 4 vorhanden.

Auch die Schnellkupplungsvorrichtung 100 bildet eine auftrennbare und wieder herstellbare Verbindung zwischen dem Melktechnikmodul 1 und der Milchleitung und ermöglicht es, das Melktechnikmodul 1 während des Betriebes, d.h. während Vakuum an der oder den Milchleitung/Milchleitungen anliegt, auszuwechseln.

Auch in diesem Beispiel sind zwei Schnellkupplungsvorrichtungen 100 vorgesehen. Jede Schnellkupplungsverbindung 100 umfasst einen Zuleitungsstutzen 110, einen Ableitungsstutzen 120, zwei gleiche Gelenkklemmen 4 und eine Ventileinrichtung 114 mit einer Betätigungseinrichtung 118.

Die Betätigungseinrichtung 118 zur Verstellung der Ventileinrichtung 114 ist unterhalb der Bodenplatte 6 im Bereich des Anschlusses des Ableitungsstutzens 112 von unten erreichbar und bedienbar. Sie wird unten noch ausführlich beschrieben.

Der Aufbau des Einsatzfalles ist bereits oben im Zusammenhang mit Figur 1 ausführlich beschrieben und wird hier nicht wiederholt.

Die Ventileinrichtung 114 befindet sich zwischen dem Zuleitungsstutzen 110 und dem Ableitungsstutzen 120 und ist aus einer geöffneten Stellung in eine geschlossene Stellung und wieder zurück verstellbar. Die Ventileinrichtung 114 wird unten noch im Detail erläutert.

Auch die Schnellkupplungsvorrichtung 100 weist die oben bereits beschriebenen drei unterschiedlichen Stellungen auf.

Der Zuleitungsstutzen 11 weist einen haubenförmigen Körper 110a mit einem schräg daran angeformten Zuleitungskörper 110'a auf. Der haubenförmige Körper 110a bildet mit seinem Innenraum als Ventilraum 110e eine Art Ventilgehäuse. Ein Innenraum des Zuleitungskörpers 110'a kommuniziert mit dem Ventilraum 110e. Ein oberes Ende des Zuleitungskörpers 110'a des Zuleitungsstutzens 110 ist mit einem Verbindungsflansch 110b versehen, der nach ISO 2852 ausgebildet ist und an seiner Oberseite eine Nut 110f für eine nicht gezeigte Dichtung aufweist. Das obere Ende des Zuleitungskörpers 110'a ist mit dem Melktechnikmodul 1 über die eine der beiden gleichen Gelenkklemmen 4 (Figur 9) verbindbar.

An dem unteren Ende des Körpers 110a des Zuleitungsstutzens 110 ist ein Dichtungsflansch 110c (ebenfalls nach ISO 2852 ausgebildet) angeformt und mit einer umlaufenden Nut 110f in seiner nach unten weisenden Stirnfläche versehen.

Der Ableitungsstutzen 12 umfasst einen rohrförmigen Körper 112a mit einem kreisrunden Querschnitt und einem Innenraum als Verbindungsleitung 112d. Etwa im unteren Drittel des Ableitungsstutzens 112 schließt sich koaxial an den Körper 112a ein Lagerabschnitt 112h mit der Betätigungseinrichtung 118 an, die unten noch näher erläutert wird.

Im Bereich des Übergangs des Körpers 112a in den Lagerabschnitt 118 ist ein rohrförmiger Ableitungskörper 112b mit kreisrundem Querschnitt und einem Innenraum als Ableitung 112e schräg nach unten weisend angeformt. Die Ableitung 112e kommuniziert mit der Verbindungsleitung 112d des Körpers 112a.

Das untere Ende des Ableitungskörpers 112b ist mit einem hier konischen Verbindungsende 112'b versehen, das eine nicht gezeigte Verbindung zur Milchleitung bildet.

Ein oberes Ende des Körpers 112a des Ableitungsstutzens 112 ist mit einem Dichtungsflansch 112c nach ISO 2852 versehen, der in seiner Oberseite auch eine umlaufende Nut 112f eingeformt aufweist, welche im zusammengebauten Zustand in der geschlossenen und geöffneten Verbindungsstellung der Nut 110f des Dichtungsflansches 110c des Zuleitungsstutzens 110 gegenüberliegt und mit dieser eine Dichtung 113 aufnimmt. Die Dichtungsflansche 110c und 112c sind mit der anderen Gelenkklemme 4 der beiden Gelenkklemmen 4 verbindbar.

Ein Innendurchmesser des Ventilraums 110e des Zuleitungsstutzens 110 ist größer als ein Innendurchmesser der Verbindungsleitung 112d des Ableitungsstutzens 12. Ein konischer Ventilsitz 112g innerhalb des Dichtungsflansches 112c des Ableitungsstutzens 112 bildet einen Übergang von dem Ventilraum 110e des Zuleitungsstutzens 110 in die Verbindungsleitung 112d des Ableitungsstutzens 112.

Der Ventilraum 110e des Zuleitungsstutzens 110 und der Körper 112a des Ableitungsstutzens 120 sind derart zentriert, dass sie koaxial zu einer gemeinsamen Achse 100a angeordnet sind.

Der Dichtungsflansch 110c des Zuleitungsstutzens 110 und der Dichtungsflansch 112c des Ableitungsstutzens 112 sind umlaufend von der anderen Gelenkklemme 4 umgeben und werden von dieser, wenn sie gespannt ist wie in Figur 10 bis 12 zu erkennen ist, über ihre konischen Außenprofile nach ISO 2852 dicht zusammengepresst. Dabei bildet die Dichtung 113 eine dichte Verbindung zwischen dem Zuleitungsstutzen 110 und dem Ableitungsstutzen 112.

Die andere Gelenkklemme 4 umfasst zwei Klemmbügel 4a, 4b, welche mit jeweils einem Ende in einer Gelenkachse 4d miteinander verschwenkbar verbunden sind. Die anderen sich gegenüberliegenden Enden sind gabelförmig ausgebildet und mit einem schraubbaren Spannelement 4c versehen, das mit einem Bolzen an dem gabelförmigen Ende des einen Klemmbügels 4b verschwenkbar angebracht ist. Die andere Gelenkklemme 4 kann z. B. eine übliche Gelenkklemme für eine Flanschverbindung nach ISO 2852 sein.

Die Ventileinrichtung 114 umfasst einen Ventilkörper 115, eine Ventilstange 116, den Ventilsitz 112g und die Betätigungseinrichtung 118.

Der Ventilkörper 115 ist kegelartig ausgebildet und weist eine umlaufende konische Dichtfläche 115a und eine Oberseite 115b auf. Die Kegelform des Ventilkörpers 115 verjüngt sich nach unten. Der Ventilkörper 115 ist mit einem oberen Stangenende 116a der Ventilstange 116 über ein Befestigungselement 117, z.B. eine Schraube, fest verbunden. Die konische Dichtfläche 115a korrespondiert mit dem konischen Ventilsitz 112g in dem Dichtungsflansch 112c des Ableitungsstutzens 112.

Die Ventilstange 116 erstreckt sich koaxial zu der Achse 100a durch den Körper 112a in der Verbindungsleitung 112d in den Lagerabschnitt 112h hinein und durch diesen hindurch bis in die Betätigungseinrichtung 118, mit deren Betätigungselement 120 sie mit ihrem unteren Stangenende 116b fest verbunden ist.

Die Ventilstange 116 ist in dem Lagerabschnitt 112h des Ableitungsstutzens 112 in einer Buchse 123 in Richtung der Achse 100a längsverschieblich geführt und durch eine Dichtung 124 gegenüber der Verbindungsleitung 112d des Körpers 112a des Ableitungsstutzens 112 abgedichtet.

Die Betätigungseinrichtung 118 umfasst einen Lagerflansch 119 mit einem Hülsenabschnitt 119a, das Betätigungselement 120, eine Kulissenführung 121 und ein Kraftspeicherelement 122.

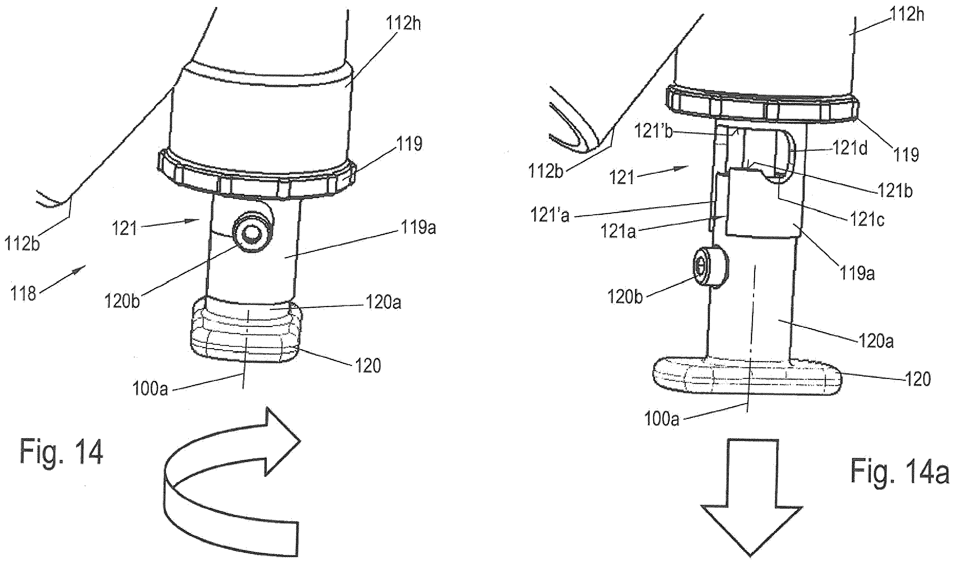

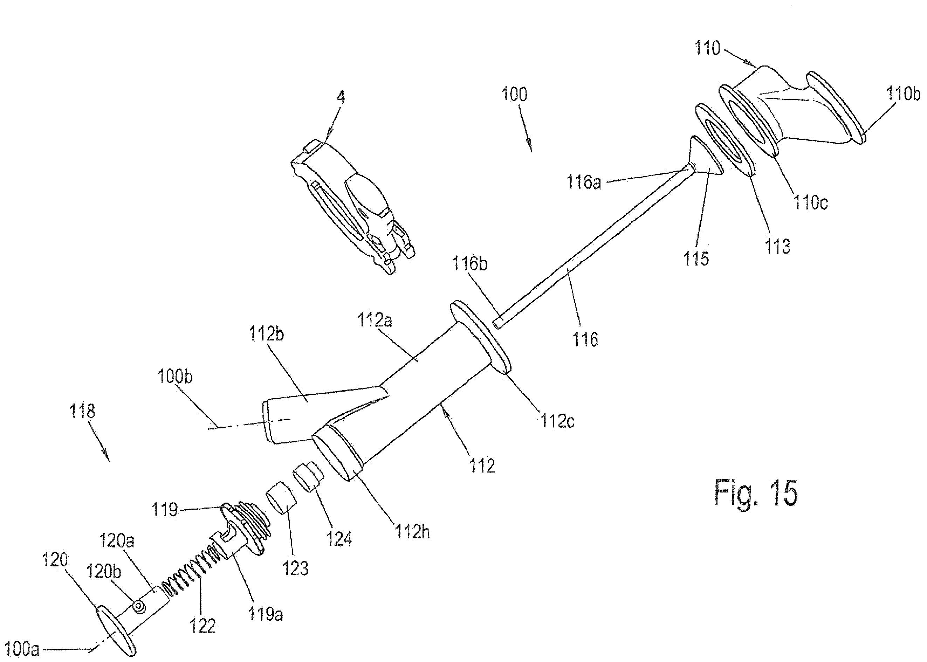

Figur 14 zeigt eine vergrößerte Perspektivansicht der Betätigungseinrichtung 118 des zweiten Ausführungsbeispiels nach Figur 10 in der geöffneten Verbindungstellung und Figur 14a stellt eine vergrößerte Perspektivansicht der Betätigungseinrichtung 118 nach Figur 14 in der geschlossenen Verbindungstellung oder in der geschlossenen Trennstellung dar. In Figur 15 ist eine schematische Explosionsdarstellung des zweiten Ausführungsbeispiels nach Figur 10 gezeigt.

Das Betätigungselement 120 weist ein ballenförmiges Ende auf, das an einem Körper 120a angeformt ist. In dem Körper 120a ist das untere Stangenende 116b der Ventilstange 116 befestigt. Der Körper 120a ist in dem Hülsenabschnitt 119a des Lagerflansches 119 in Richtung der Achse 100a längsverschieblich geführt angeordnet.

Der Lagerflansch 119 ist mit dem Hülsenabschnitt 119a fest verbunden und in dem unteren Ende des Lagerabschnitts 112h des Ableitungsstutzens 112 befestigt. In dem gezeigten Beispiel ist der Lagerflansch 119 in den Lagerabschnitt 112 eingeschraubt. Dabei drückt er über das Kraftspeicherelement 122 die Buchse 123 gegen die Dichtung 124, welche an einer Schulter einer Innenbohrung 112i des Lagerabschnitts 112h axial anliegt. Auf diese Weise kann die Dichtung 124 nachgestellt werden, falls notwendig.

Das Betätigungselement 120 ist mit einem Führungselement 120b versehen, welches radial von dem Körper 120a des Betätigungselementes 120 hervorsteht. Das Führungselement 120b kann z.B. ein Bolzen oder eine Schraube, beispielsweise eine Innensechskantschraube mit einem zylinderförmigen Kopf sein. Diese Schraube ist hier gleichzeitig ein Befestigungselement, welches das untere Stangenende 116b der Ventilstange 116 mit dem Betätigungselement 120 verbindet.

Der Kopf des Führungselementes 120b ist in der Kulissenführung 121 geführt, wodurch die Stellungen der Ventileinrichtung 114 festgelegt sind, wie untenstehend noch beschrieben wird und aus den Figuren 14 und 14a deutlich erkennbar ist.

Die Kulissenführung 121 ist in der Wandung des Hülsenabschnitts 119a eingeformt. Zwei Axialabschnitte 121a und 121'a verlaufen von einem unteren Ende des Hülsenabschnitts 119a beginnende parallel in einem umfänglichen Abstand voneinander in axialer Richtung der Achse 10a nach oben. Der umfängliche Abstand korrespondiert mit dem Durchmesser des Kopfes des Führungselementes 120b. Der eine Axialabschnitt 121a geht dann rechtwinklig in einen Umfangsabschnitt 121b über, dem ein weiterer, axial zu ihm paralleler Umfangsabschnitt 121'b in einem axialen Abstand, der etwas größer als der Durchmesser des Kopfes des Führungselementes 120b ist, zugeordnet ist. Dieser Umfangsabschnitt 121'b beginnt am Ende des anderen Axialabschnitts 121'a. Der Umfangsabschnitt 121b geht in einen nach unten verlaufenden Bogenabschnitt 121c über, welcher dann in einen axial nach oben verlaufenden Anschlagabschnitt 121d übergeht. Der axial verlaufende Anschlagabschnitt 121d mündet dann an seinem oberen Ende in einem weiteren Bogen in den oberen Umfangsabschnitt 121'b.

In der in Figur 11 gezeigten geöffneten Verbindungsstellung ist die Ventileinrichtung 114 geöffnet. Dabei befindet sich der Ventilkörper 115 in dem Ventilraum 110e und ein Durchgang zwischen dem Zuleitungsstutzen 110 und dem Ableitungsstutzen 112 ist frei. Damit ist eine Verbindung zwischen dem Melktechnikmodul 1 und der Milchleitung geschaffen.

Das Betätigungselement 120 der Betätigungseinrichtung 118 ist in dieser Stellung mit der Ventilstange 116 und mit dem Ventilkörper 115 nach oben gegen die Kraft des Kraftspeicherelementes 122 geschoben und von unten gesehen im Uhrzeigersinn so gedreht, dass das Führungselement 120b in dem Bogenabschnitt 121c der Kulissenführung 121 angeordnet ist. Aufgrund des gespannten Kraftspeicherelementes 122 wird das Führungselement 120b nach unten in den Bogenabschnitt 121c gedrückt, wodurch die geöffnete Stellung der Ventileinrichtung 114 beibehalten wird.

Zum Einnehmen der geschlossenen Verbindungsstellung der Schnellkupplungsvorrichtung 100 wird zunächst die Ventileinrichtung 114 geschlossen. Dazu wird das Betätigungselement 120 nach oben gegen die Kraft des Kraftspeicherelementes 122 gedrückt, damit das Führungselement 120b aus dem Bogenabschnitt 121c von unten gesehen durch Drehung des Betätigungselementes 120 um die Achse 100a gegen den Uhrzeigersinn über den Umfangsabschnitt 121b in die Axialabschnitte 121a, 121'a bewegt werden kann. Wenn das Führungselement 120b in den Axialabschnitten 121a, 121'a angekommen ist, kann es sich axial in Richtung der Achse 100a nach unten frei bewegen, wobei das Betätigungselement 120, die damit verbundene Ventilstange 116 und der Ventilkörper 115 nach unten verschoben werden können.

Schließlich kommt die Dichtfläche 115a des Ventilkörpers 115 zur Anlage an dem Ventilsitz 112g des Dichtungsflansches 112c des Ableitungsstutzens 112. Damit ist die geschlossene Stellung der Ventileinrichtung 114 eingenommen. Der Ventilkörper 115 wird durch die verbleibende Vorspannkraft des Kraftspeicherelementes 122 gegen den Ventilsitz 112g gedrückt. Zusätzlich wirkt die Kraft des Vakuums auf den Ventilkörper 115, um die geschlossene Stellung beizubehalten. Dies ist in Figur 12 in der geschlossenen Verbindungsstellung gezeigt.

Die Kulissenführung 121 mit dem Führungselement 120b können z.B. auch als Kurvenbahn mit Rastfunktion beschrieben werden. Mit anderen Worten, die Funktionseinheit Betätigungseinrichtung 118 der Ventileinrichtung 114 ist ein so genanntes mechanisches RS-Flip-Flop mit zwei stabilen Zuständen, nämlich Ventileinrichtung 114 verschlossen und Ventileinrichtung 114 geöffnet.

Jetzt können die eine und die andere Gelenkklemme 4 gelöst werden und das Melktechnikmodul 1 mit dem Zuleitungsabschnitt 110 ausgebaut werden. Damit ist die in Figur 13 gezeigte verschlossene Trennstellung erreicht. In dieser Stellung kann der Dichtungsflansch 112c einschließlich der Oberseite 115b des Ventilkörpers 115 gesäubert und desinfiziert werden. Das Vakuum in dem Ableitungsstutzen 112 kann beibehalten werden.

Die anderen Stellungen werden in umgekehrter Reihenfolge wie oben beschrieben eingestellt.

Die oben beschriebenen Ausführungsbeispiele schränken die Erfindung nicht ein. Die Erfindung ist im Rahmen der beigefügten Ansprüche modifizierbar.

So ist z.B. denkbar, dass die Schieberklemme 5 für eine genaue Positionierung um die Achse 10a einen Anschlag oder/und eine Raststellung aufweist, z.B. in Verbindung mit dem umlaufenden Kragen 12g des Ableitungsstutzens 12.

Die Betätigungseinrichtung 118 könnte auch als ein mechanisches T-Flip-Flip ausgebildet sein. Dabei würde ein erster Druck auf das Betätigungselement 120 die geöffnete Stellung der Ventileinrichtung 114 einschalten, und ein zweiter Druck die Ventileinrichtung 114 aus der geöffneten Stellung wieder in die geschlossene Stellung verstellen.

Die Betätigungseinrichtung 118 kann anstelle einer manuellen Betätigung oder zusätzlich zu dieser mit einem Aktuator versehen sein. Dieser Aktuator kann z.B. ein Pneumatik- oder Hydraulikzylinder, Magnetschalter, Stellmotor o.dgl. sein.

### Bezugszeichen

- 1: Melktechnikmodul
- 2: Melkanlagenseite
- 3: Vakuumseite
- 4: Gelenkklemme
- 5: Schieberklemme
- 5a, 5b: Klemmbügel
- 5c: Spannelement
- 5d: Gelenkachse
- 5e: Schlitz
- 5f: Bolzen
- 6: Bodenplatte
- 7,8: Durchgang
- 9: Vakuumströmung
- 10, 100: Schnellkupplungsvorrichtung
- 10a, 100a, 100b: Achse
- 11, 110: Zuleitungsstutzen
- 11a: Körper
- 11b: Verbindungsflansch
- 11c: Dichtungsflansch
- 11d: Zentrierung
- 11e: Aufnahme
- 11f: Innenraum
- 11g: Eingriffsabschnitt
- 12: Ableitungsstutzen
- 12a: Körper
- 12b: Verbindungsende
- 12c: Dichtungsflansch
- 12d: Zentrierung
- 12e: Aufnahme
- 12f: Innenraum
- 12g: Kragen
- 12h: Führungsschlitz
- 13: Zuleitungsdichtung
- 13a: Ableitungsdichtung
- 13b: Kontaktebene
- 14: Ventileinrichtung
- 15: Schieberelement
- 15a: Betätigungsabschnitt
- 15b: Dichtabschnitt
- 15c: Endabschnitt
- 15d: Rastöffnung
- 16: Schieberführung
- 16a: Segment
- 16b: Ausnehmung
- 16c: Wand
- 16d: Rastabschnitt
- 100: Kupplungsvorrichtung
- 100a,100b: Achse
- 110: Zuleitungsstutzen
- 110a: Körper
- 110b: Verbindungsflansch
- 110c: Dichtungsflansch
- 110d: Zuleitung
- 110e: Ventilraum
- 110f: Nut
- 112: Ableitungsstutzen
- 112a: Körper
- 112b: Ableitungskörper
- 112'b: Verbindungsende
- 112c: Dichtungsflansch
- 112d: Verbindungsleitung
- 112e: Ableitung
- 112f: Nut
- 112g: Ventilsitz
- 112h: Lagerabschnitt
- 112i: Innenbohrung
- 113: Dichtung
- 114: Ventileinrichtung
- 115: Ventilkörper
- 115a: Dichtfläche
- 115b: Oberseite
- 116: Ventilstange
- 116a, 116b: Stangenende
- 117: Befestigungselement
- 118: Betätigungseinrichtung
- 119: Lagerflansch
- 119a: Hülsenabschnitt
- 120: Betätigungselement
- 120a: Körper
- 120b: Führungselement
- 121: Kulissenführung
- 121a, 121'a: Axialabschnitt
- 121b, 121'b: Umfangsabschnitt
- 121c: Bogenabschnitt
- 121d: Anschlagabschnitt
- 122: Kraftspeicherelement
- 123: Buchse
- 124: Dichtung

## Patentansprüche

1. Schnellkupplungsvorrichtung (10, 100) für ein Melktechnikmodul (1) einer Melkanlage zum Melken von milchgebenden Tieren, wobei die Schnellkupplungsvorrichtung (10, 100) eine auftrennbare und wieder herstellbare Verbindung zwischen dem Melktechnikmodul (1) und einer Milchleitung bildet und eine Ventileinrichtung (14, 114) aufweist, welche aus einem geschlossenen Zustand in einen geöffneten Zustand und wieder zurück verstellbar ist, wobei die Schnellkupplungsvorrichtung (10, 100) einen Zuleitungsstutzen (11, 110), einen Ableitungsstutzen (12, 112) und zwei Gelenkklemmen (4, 5) aufweist, **dadurch gekennzeichnet, dass** der Zuleitungsstutzen (11, 110) an einem Ende mit einer Gelenkklemme (4) eine auftrennbare und wieder herstellbare Verbindung zwischen dem Melktechnikmodul (1) und dem Zuleitungsstutzen (11, 110) bildet, und dass der Zuleitungsstutzen (11, 110) an seinem anderen Ende mit der anderen der Gelenkklemmen (4, 5) eine weitere auftrennbare und wieder herstellbare Verbindung zwischen dem Ableitungsstutzen (12, 112) und dem Zuleitungsstutzen (11, 110) bildet.

2. Schnellkupplungsvorrichtung (10, 100) nach Anspruch 1, bei der die andere der Gelenkklemmen (4, 5) als eine Schieberklemme (5) mit mindestens einem Schlitz (5e) ausgebildet ist.

3. Schnellkupplungsvorrichtung (10) nach Anspruch 2, **dadurch gekennzeichnet, dass** der Zuleitungsstutzen (11) an seinem anderen Ende einen Dichtungsflansch (11c) mit einer Zuleitungsdichtung (13) aufweist, welcher mit einem Dichtungsflansch (12c) mit einer Ableitungsdichtung (13a) des Ableitungsstutzens (12) und der Schieberklemme (5) die weitere auftrennbare und wieder herstellbare Verbindung bildet.

4. Schnellkupplungsvorrichtung (10) nach Anspruch 3, **dadurch gekennzeichnet, dass** die Ventileinrichtung (14) zwischen dem anderen Ende des Zuleitungsstutzens (11) mit der Schieberklemme (5) und dem Ableitungsstutzen (12) angeordnet ist.

5. Schnellkupplungsvorrichtung (10) nach Anspruch 4, **dadurch gekennzeichnet, dass** die Ventileinrichtung (14) die Zuleitungsdichtung (13), die Ableitungsdichtung (13a) und ein separates Schieberelement (15) umfasst.

6. Schnellkupplungsvorrichtung (10) nach Anspruch 5, **dadurch gekennzeichnet, dass** die Ventileinrichtung (14) in dem geöffneten Zustand ist, wenn das separate Schieberelement (15) entfernt ist, und dass die Ventileinrichtung (14) in dem geschlossenen Zustand ist, wenn das separate Schieberelement (15) zwischen der Zuleitungsdichtung (13) und der Ableitungsdichtung (13a) angeordnet ist.

7. Schnellkupplungsvorrichtung (10) nach Anspruch 6, **dadurch gekennzeichnet, dass** das separate Schieberelement (15) in der geschlossenen Stellung der Ventileinrichtung (14) zwischen der Zuleitungsdichtung (13) und der Ableitungsdichtung (13a) in einer Kontaktebene (13b), in welcher die Zuleitungsdichtung (13) und die Ableitungsdichtung (13a) miteinander in Kontakt stehen, zumindest in Führungsschlitzen (12h) des Dichtungsflansches (12c) des Ableitungsstutzens (12) aufgenommen und gehalten ist.

8. Schnellkupplungsvorrichtung (10) nach Anspruch 7, **dadurch gekennzeichnet, dass** der Dichtungsflansch (12c) des Ableitungsstutzens (12) eine Schieberführung (16), bei welcher die Führungsschlitze (12h) in Segmente (16a) eingeformt sind, und einen Rastabschnitt (16d) aufweist, welcher in dem geschlossenen Zustand der Ventileinrichtung (14) mit einer Rastöffnung (15d) des eingeschobenen Schieberelementes (15) in Eingriff steht.

9. Schnellkupplungsvorrichtung (10) nach Anspruch 8, **dadurch gekennzeichnet, dass** die Segmente (16a) des Dichtungsflansches (12c) des Ableitungsstutzens (12) in Richtung seiner Achse (10a) hervorstehen, wobei zwischen ihnen in Richtung der Achse (10a) relativ zu ihnen abgesenkte Ausnehmungen (16b) angeordnet sind, welche mit den Segmenten (16a) ein Profil bilden, das in der weiteren hergestellten Verbindung mit einem mit diesem korrespondierenden Profil eines Eingriffsabschnitts (11g) der Unterseite des Dichtungsflansches (12c) des Zuleitungsstutzens (11) formschlüssig und relativ zueinander unverdrehbar in Eingriff steht.

10. Schnellkupplungsvorrichtung (10) nach einem der Ansprüche 7 bis 9, **dadurch gekennzeichnet, dass** sich das separate Schieberelement (15) in der geschlossenen Stellung der Ventileinrichtung (14) durch zumindest einen Schlitz (5e) der Schieberklemme (5) erstreckt.

11. Schnellkupplungsvorrichtung (10) nach Anspruch 10, **dadurch gekennzeichnet, dass** das Schieberelement (15) in der geschlossenen Stellung der Ventileinrichtung (14) in der weiteren aufgetrennten und in der hergestellten Verbindung zwischen dem Zuleitungsstutzen (11) und dem Ableitungsstutzen (12) eine dichte Verbindung mit der Ableitungsdichtung (13a) bildet.

12. Schnellkupplungsvorrichtung (100) nach Anspruch 2, **dadurch gekennzeichnet, dass** der Zuleitungsstutzen (110) an seinem anderen Ende einen Dichtungsflansch (110c) aufweist, welcher mit einem Dichtungsflansch (112c) des Ableitungsstutzens (112), einer zwischen diesen Dichtungsflanschen (110c, 112c) angeordneten Dichtung (113) und der anderen Gelenkklemme (4) die weitere auftrennbare und wieder herstellbare Verbindung bildet.

13. Schnellkupplungsvorrichtung (100) nach Anspruch 12, **dadurch gekennzeichnet, dass** die Ventileinrichtung (114) zwischen dem anderen Ende des Zuleitungsstutzens (110) mit der anderen Gelenkklemme (4) und dem Ableitungsstutzen (112) angeordnet ist.

14. Schnellkupplungsvorrichtung (100) nach Anspruch 13, **dadurch gekennzeichnet, dass** die Ventileinrichtung (114) einen Ventilkörper (115), eine Ventilstange (116), einen Ventilsitz (112g) in dem Dichtungsflansch (112c) des Ableitungsstutzens (112) und eine Betätigungseinrichtung (118) umfasst.

15. Schnellkupplungsvorrichtung (100) nach Anspruch 14, **dadurch gekennzeichnet, dass** der Ventilkörper (115) mit einem oberen Stangenende (116a) der Ventilstange (116) fest verbunden ist, wobei eine Dichtfläche (115a) des Ventilkörpers (115) mit dem Ventilsitz (112g) in dem Dichtungsflansch (112c) des Ableitungsstutzens (112) korrespondiert, wobei der Ventilkörper (115) in der geschlossenen Stellung der Ventileinrichtung (114) mit seiner Dichtfläche (115a) den Ventilsitz (112g) verschließt, und wobei in der geöffneten Stellung der Ventileinrichtung (114) die Dichtfläche (115a) des Ventilkörpers (115) von dem Ventilsitz (112g) beabstandet ist.

16. Schnellkupplungsvorrichtung (100) nach Anspruch 14 oder 15, **dadurch gekennzeichnet, dass** sich die Ventilstange (116) durch eine Verbindungsleitung (112d) des Körpers (112a) des Ableitungsstutzens (112) hindurch in einen Lagerabschnitt (112h) des Ableitungsstutzens (112) hinein und durch diesen Lagerabschnitt (112h) hindurch bis in die Betätigungseinrichtung (118) erstreckt, wobei ein unteres Stangenende (116b) der Ventilstange (116) mit einem Betätigungselement (120) der Betätigungseinrichtung (118) fest verbunden ist.

17. Schnellkupplungsvorrichtung (100) nach Anspruch 16, **dadurch gekennzeichnet, dass** die Ventilstange (116) in dem Lagerabschnitt (112h) des Ableitungsstutzens (112) in einer Buchse (123) längsverschieblich geführt und durch eine Dichtung (124) gegenüber der Verbindungsleitung (112d) des Körpers (112a) des Ableitungsstutzens (112) abgedichtet ist.

18. Schnellkupplungsvorrichtung (100) nach einem der Ansprüche 14 bis 17, **dadurch gekennzeichnet, dass** die Betätigungseinrichtung (118) einen Lagerflansch (119) mit einem Hülsenabschnitt (119a), das Betätigungselement (120), eine Kulissenführung (121) und ein Kraftspeicherelement (122) umfasst.

19. Schnellkupplungsvorrichtung (100) nach Anspruch 18, **dadurch gekennzeichnet, dass** die Kulissenführung (121) in der Wandung des Hülsenabschnitts (119a) eingeformt ist und mit einem mit dem Betätigungselement (120) verbundenes Führungselement (120b) ein so genanntes mechanisches RS-Flip-Flop mit zwei stabilen Zuständen, nämlich Ventileinrichtung (114) geschlossen und Ventileinrichtung (114) geöffnet, bildet.

20. Schnellkupplungsvorrichtung (10, 100) nach einem der vorhergehenden Ansprüche, **dadurch gekennzeichnet, dass** zumindest ein Abschnitt des Zuleitungsstutzens (11, 110) und zumindest ein davon trennbarer und wieder damit verbindbarer Abschnitt des Ableitungsstutzens (12, 112) zueinander zentriert angeordnet sind.

## Claims

1. A quick-coupling device (10, 100) for a milking module (1) of a milking system for milking dairy animals, wherein the quick-coupling device (10, 100) forms a releasable and re-establishable connection between the milking module (1) and a milk pipe and comprises a valve mechanism (14, 114) which is able to be moved from a closed state into an open state and vice versa, wherein the quick-coupling device (10, 100) comprises a feeding port (11, 110), a discharge port (12, 112) and two articulated clamps (4, 5), **characterized in that** the feeding port (11, 110) at one end forms with an articulated clamp (4) a releasable and re-establishable connection between the milking module (1) and the feeding port (11, 110) and **in that** the feeding port (11, 110) at its other end forms with the other of the articulated clamps (4, 5) a further releasable and re-establishable connection between the discharge port (12) and the feeding port (11).

2. The quick-coupling device (10) as claimed in claim 1, wherein the other one of the articulated clamps (4, 5) is configured as a sliding clamp (5) having at least one slot (5e).

3. The quick-coupling device (10) as claimed in claim 2, **characterized in that** the feeding port (11) at its other end comprises a sealing flange (11c) with a feeding seal (13), which forms the further releasable and re-establishable connection with a sealing flange (12c) with a discharge seal (13a) of the discharge port (12) and the sliding clamp (5) .

4. The quick-coupling device (10) as claimed in claim 3, **characterized in that** the valve mechanism (14) is arranged between the other end of the feeding port (11) with the sliding clamp (5) and the discharge port (12).

5. The quick-coupling device (10) as claimed in claim 4, **characterized in that** the valve mechanism (14) comprises the feeding seal (13), the discharge seal (13a) and a separate slide element (15).

6. The quick-coupling device (10) as claimed in claim 5, **characterized in that** the valve mechanism (14) is in the open state when the separate slide element (15) is removed and **in that** the valve mechanism (14) is in the closed state when the separate slide element (15) is arranged between the feeding seal (13) and the discharge seal (13a).

7. The quick-coupling device (10) as claimed in claim 6, **characterized in that** in the closed position of the valve mechanism (14) the separate slide element (15) is received and held between the feeding seal (13) and the discharge seal (13a) in a contact plane (13b) in which the feeding seal (13) and the discharge seal (13a) are in contact with one another, at least in guide slots (12h) of the sealing flange (12c) of the discharge port (12) .

8. The quick-coupling device (10) as claimed in claim 7, **characterized in that** the sealing flange (12c) of the discharge port (12) comprises a slide guide (16) in which the guide slots (12h) are integrally formed in segments (16a) and comprises a latching portion (16d) which in the closed state of the valve mechanism (14) is in engagement with a latching opening (15d) of the inserted slide element (15) .

9. The quick-coupling device (10) as claimed in claim 8, **characterized in that** the segments (16a) of the sealing flange (12c) of the discharge port (12) protrude in the direction of its axis (10a), wherein recesses are arranged between said segments in the direction of its axis, said recesses (16b) being countersunk relative thereto and forming with the segments (16a) a profile which, in the further connection which is produced, is in engagement with a profile corresponding thereto of an engagement portion (11g) of the lower face of the sealing flange (12c) of the feeding port (11), in a positive and non-rotational manner.

10. The quick-coupling device (10) as claimed in one of claims 7 to 9, **characterized in that** in the closed position of the valve mechanism (14) the separate slide element (15) extends through at least one slot (5e) of the sliding clamp (5).

11. The quick-coupling device (10) as claimed in claim 10, **characterized in that** in the closed position of the valve mechanism (14), in the further released connection and in the connection produced between the feeding port (11) and the discharge port (12), the slide element (15) forms a sealed connection with the discharge seal (13a).

12. The quick-coupling device (100) as claimed in claim 2, **characterized in that** the feeding port (110) at its other end comprises a sealing flange (110c) which forms the further releasable and re-establishable connection with a sealing flange (112c) of the discharge port (112), a seal (113) arranged between these sealing flanges (110c, 112c) and the other articulated clamp (4).

13. The quick-coupling device (100) as claimed in claim 12, **characterized in that** the valve mechanism (114) is arranged between the other end of the feeding port (110) with the other articulated clamp (4) and the discharge port (112) .

14. The quick-coupling device (100) as claimed in claim 13, **characterized in that** the valve mechanism (114) comprises a valve body (115), a valve rod (116), a valve seat (112g) in the sealing flange (112c) of the discharge port (112) and an actuating device (118).

15. The quick-coupling device (100) as claimed in claim 14, **characterized in that** the valve body (115) is fixedly connected to an upper rod end (116a) of the valve rod (116), wherein a sealing surface (115a) of the valve body (115) corresponds to the valve seat (112g) in the sealing flange (112c) of the discharge port (112), wherein in the closed position of the valve mechanism (114) the valve body (115) closes the valve seat (112g) with its sealing surface (115a), and wherein in the open position of the valve mechanism (114) the sealing surface (115a) of the valve body (115) is spaced apart from the valve seat (112g).

16. The quick-coupling device (100) as claimed in claim 14 or 15, **characterized in that** the valve rod (116) extends through a connecting line (112d) of the body (112a) of the discharge port (112) into a bearing portion (112h) of the discharge port (112) and through said bearing portion (112h) into the actuating device (118), wherein a lower rod end (116b) of the valve rod (116) is fixedly connected to an actuating element (120) of the actuating device (118).

17. The quick-coupling device (100) as claimed in claim 16, **characterized in that** the valve rod (116) in the bearing portion (112h) of the discharge port (112) is longitudinally displaceably guided in a bushing (123) and is sealed by a seal (124) relative to the connecting line (112d) of the body (112a) of the discharge port (112).

18. The quick-coupling device (100) as claimed in one of claims 14 to 17, **characterized in that** the actuating device (118) comprises a bearing flange (119) with a sleeve portion (119a), the actuating element (120), a slotted guide (121) and an energy storage element (122).

19. The quick-coupling device (100) as claimed in claim 18, **characterized in that** the slotted guide (121) is integrally formed in the wall of the sleeve portion (119a) and, with a guide element (120b) connected to the actuating element (120), forms a so-called mechanical RS flip flop with two stable states, namely with the valve mechanism (114) closed and with the valve mechanism (114) open.

20. The quick-coupling device (10, 100) as claimed in one of the preceding claims, **characterized in that** at least one portion of the feeding port (11, 110) and at least one portion of the discharge port (12, 112) which is releasable therefrom and reconnectable thereto are arranged centered relative to one another.

## Revendications

1. Dispositif d'accouplement rapide (10, 100) pour un module technique de traite (1) d'une installation de traite pour traire des animaux producteurs de lait, lequel dispositif d'accouplement rapide (10, 100) forme une liaison séparable et rétablissable entre le module technique de traite (1) et une conduite de lait et présente un moyen formant soupape (14, 114) qui peut être déplacé d'un état fermé dans un état ouvert et inversement, le dispositif d'accouplement rapide (10, 100) présentant un raccord de conduite d'amenée (11, 110), un raccord de conduite de décharge (12, 112) et deux pinces de serrage articulées (4, 5), **caractérisé en ce que** le raccord de conduite d'amenée (11, 110) présente à une extrémité avec une pince de serrage articulée (4) une liaison séparable et rétablissable entre le module technique de traite (1) et le raccord de conduite d'amenée (11, 110), et que le raccord de conduite d'amenée (11, 110) forme à son autre extrémité avec l'autre des pinces de serrage articulées (4, 5) une autre liaison séparable et rétablissable entre le raccord de conduite de décharge (12, 112) et le raccord de conduite d'amenée (11, 110).

2. Dispositif d'accouplement rapide (10, 100) selon la revendication 1, dans lequel l'autre des pinces de serrage articulées (4, 5) est conçue comme une pince de serrage coulissante (5) munie d'au moins une fente (5e).

3. Dispositif d'accouplement rapide (10) selon la revendication 2, **caractérisé en ce que** le raccord de conduite d'amenée (11) présente à son autre extrémité une bride d'étanchéité (11c) avec un joint de conduite d'amenée (13) qui, avec une bride d'étanchéité (12c) munie d'un joint de conduite de décharge (13a) du raccord de conduite de décharge (12) et la pince de serrage coulissante (5), forme l'autre liaison séparable et rétablissable.

4. Dispositif d'accouplement rapide (10) selon la revendication 3, **caractérisé en ce que** le moyen formant soupape (14) est disposé entre l'autre extrémité du raccord de conduite d'amenée (11) avec la pince de serrage coulissante (5) et le raccord de conduite de décharge (12).

5. Dispositif d'accouplement rapide (10) selon la revendication 4, **caractérisé en ce que** le moyen formant soupape (14) comprend le joint de conduite d'amenée (13), le joint de conduite de décharge (13a) et un élément coulissant séparé (15) .

6. Dispositif d'accouplement rapide (10) selon la revendication 5, **caractérisé en ce que** le moyen formant soupape (14) est à l'état ouvert lorsque l'élément coulissant séparé (15) est enlevé, et que le moyen formant soupape (14) est à l'état fermé lorsque l'élément coulissant séparé (15) est disposé entre le joint de conduite d'amenée (13) et le joint de conduite de décharge (13a).

7. Dispositif d'accouplement rapide (10) selon la revendication 6, **caractérisé en ce que** l'élément coulissant séparé (15) est reçu et maintenu, dans la position fermée du moyen formant soupape (14), entre le joint de conduite d'amenée (13) et le joint de conduite de décharge (13a) dans un plan de contact (13b) dans lequel le joint de conduite d'amenée (13) et le joint de conduite de décharge (13a) sont en contact l'un avec l'autre, au moins dans des fentes de guidage (12h) de la bride d'étanchéité (12c) du raccord de conduite de décharge (12).

8. Dispositif d'accouplement rapide (10) selon la revendication 7, **caractérisé en ce que** la bride d'étanchéité (12c) du raccord de conduite de décharge (12) présente un guide de coulissement (16) dans lequel les fentes de guidage (12h) sont formées dans des segments (16a) et une partie d'encliquetage (16d) qui, à l'état fermé du moyen formant soupape (14), est en prise avec une ouverture d'encliquetage (15d) de l'élément coulissant (15) inséré.

9. Dispositif d'accouplement rapide (10) selon la revendication 8, **caractérisé en ce que** les segments (16a) de la bride d'étanchéité (12c) du raccord de conduite de décharge (12) font saillie dans la direction de son axe (10a), des évidements (16b) abaissés par rapport à eux dans la direction de l'axe (10a) étant disposés entre eux, lesquels forment avec les segments (16a) un profil qui, lorsque l'autre liaison est établie, est en prise par complémentarité de forme et sans possibilité de rotation l'un par rapport à l'autre avec un profil correspondant d'une partie d'engagement (11g) de la face inférieure de la bride d'étanchéité (12c) du raccord de conduite d'amenée (11) .

10. Dispositif d'accouplement rapide (10) selon l'une des revendications 7 à 9, **caractérisé en ce que** l'élément coulissant séparé (15) s'étend à travers au moins une fente (5e) de la pince de serrage coulissante (5) dans la position fermée du moyen formant soupape (14).

11. Dispositif d'accouplement rapide (10) selon la revendication 10, **caractérisé en ce que** l'élément coulissant (15), dans la position fermée du moyen formant soupape (14), lorsque l'autre liaison est séparée et la liaison entre le raccord de conduite d'amenée (11) et le raccord de conduite de décharge (12) est établie, forme une liaison étanche avec le joint de conduite de décharge (13a).

12. Dispositif d'accouplement rapide (100) selon la revendication 2, **caractérisé en ce que** le raccord de conduite d'amenée (110) présente à son autre extrémité une bride d'étanchéité (110c) qui forme l'autre liaison séparable et rétablissable avec une bride d'étanchéité (112c) du raccord de conduite de décharge (112), un joint (113) disposé entre ces brides d'étanchéité (110c, 112c) et l'autre pince de serrage articulée (4).

13. Dispositif d'accouplement rapide (100) selon la revendication 12, **caractérisé en ce que** le moyen formant soupape (114) est disposé entre l'autre extrémité du raccord de conduite d'amenée (110) avec l'autre pince de serrage (4) et le raccord de conduite de décharge (112).

14. Dispositif d'accouplement rapide (100) selon la revendication 13, **caractérisé en ce que** le moyen formant soupape (114) comprend un corps de soupape (115), une tige de soupape (116), un siège de soupape (112g) dans la bride d'étanchéité (112c) du raccord de conduite de décharge (112) et un moyen d'actionnement (118).

15. Dispositif d'accouplement rapide (100) selon la revendication 14, **caractérisé en ce que** le corps de soupape (115) est relié de manière fixe à une extrémité supérieure de tige (116a) de la tige de soupape (116), dans lequel une surface d'étanchéité (115a) du corps de soupape (115) correspond au siège de soupape (112g) dans la bride d'étanchéité (112c) du raccord de conduite de décharge (112), dans lequel le corps de soupape (115), dans la position fermée du moyen formant soupape (114), ferme le siège de soupape (112g) avec sa surface d'étanchéité (115a), et dans lequel, dans la position ouverte du moyen formant soupape (114), la surface d'étanchéité (115a) du corps de soupape (115) est espacée du siège de soupape (112g).

16. Dispositif d'accouplement rapide (100) selon la revendication 14 ou 15, **caractérisé en ce que** la tige de soupape (116) s'étend à travers une conduite de liaison (112d) du corps (112a) du raccord de conduite de décharge (112) dans une partie palier (112h) du raccord de conduite de décharge (112) et à travers cette partie palier (112h) dans le moyen d'actionnement (118), dans lequel une extrémité inférieure de tige (116b) de la tige de soupape (116) est reliée de manière fixe à un élément d'actionnement (120) du moyen d'actionnement (118).

17. Dispositif d'accouplement rapide (100) selon la revendication 16, **caractérisé en ce que** la tige de soupape (116) est guidée de manière coulissante longitudinalement dans un manchon (123) dans la partie palier (112h) du raccord de conduite de décharge (112) et est rendue étanche par un joint (124) par rapport à la conduite de liaison (112d) du corps (112a) du raccord de conduite de décharge (112) .

18. Dispositif d'accouplement rapide (100) selon l'une des revendications 14 à 17, **caractérisé en ce que** le moyen d'actionnement (118) comprend une bride de palier (119) avec une partie manchon (119a), l'élément d'actionnement (120), un guidage à coulisse (121) et un élément d'accumulation d'énergie (122) .

19. Dispositif d'accouplement rapide (100) selon la revendication 18, **caractérisé en ce que** le guidage à coulisse (121) est formé dans la paroi de la partie manchon (119a) et forme avec un élément de guidage (120b) relié à l'élément d'actionnement (120) une bascule RS dite mécanique avec deux états stables, à savoir moyen formant soupape (114) fermé et moyen formant soupape (114) ouvert.

20. Dispositif d'accouplement rapide (10, 100) selon l'une des revendications précédentes, **caractérisé en ce qu'**au moins une partie du raccord de conduite d'amenée (11, 110) et au moins une partie du raccord de conduite de décharge (12, 112) pouvant en être séparée et y être à nouveau reliée sont disposées de manière centrée l'une par rapport à l'autre.
